# EUROPÄISCHE PATENTSCHRIFT

(11) **EP 1 044 427 B1**
(45) Veröffentlichungstag und Bekanntmachung des Hinweises auf die Patenterteilung: **05.09.2001**
(21) Anmeldenummer: 99932673.9
(22) Anmeldetag: 29.05.1999
(51) Int. Cl.: G06K 19/08, G06K 19/06, G11B 7/24

(54) **DIGITALER DATENTRÄGER**
DIGITAL DATA CARRIER
SUPPORT DE DONNEES NUMERIQUE

(30) Priorität: 29.05.1998 DE 19824059; 03.12.1998 CH 240298
(43) Veröffentlichungstag der Anmeldung: 18.10.2000
(73) Patentinhaber: Adivan High Tech Ltd., Hamilton (BM)
(72) Erfinder: OTTERSTEIN, Karl, 34123 Kassel (DE); KÄLIN, Marco, 8820 Wädenswil (CH)
(74) Vertreter: Manitz, Finsterwald & Partner GbR
(86) Internationale Anmeldenummer: DE9901582
(87) Internationale Veröffentlichungsnummer: WO9962029

(56) Entgegenhaltungen:
- EP-A- 0 702 314
- DE-U- 29 709 648
- FR-A- 2 746 201
- GB-A- 2 239 974
- NL-A- 9 000 256
- US-A- 4 812 633
- US-A- 4 868 373
- US-A- 5 735 550
- US-A- 5 736 782
- IKUTA K ET AL: "Biochemical IC chip toward cell free DNA protein synthesis" PROCEEDINGS MEMS 98. IEEE. ELEVENTH ANNUAL INTERNATIONAL WORKSHOP ON MICRO ELECTRO MECHANICAL SYSTEMS. AN INVESTIGATION OF MICRO STRUCTURES, SENSORS, ACTUATORS, MACHINES AND SYSTEMS (CAT. NO.98CH36176), PROCEEDINGS IEEE ELEVENTH ANNUAL INTERNATIONAL , Seiten 131-136, XP002115497 1998, New York, NY, USA, IEEE, USA ISBN: 0-7803-4412-X

## Beschreibung

Die Erfindung betrifft einen digitalen Datenträger mit einem von einem Standardaußendurchmesser abweichenden Umriß eines Trägerkörpers zur Abspielung in einem Standard-CD-Laufwerk, das eine ausfahrbare Schublade mit einer ersten Aufnahme für Datenträger größeren Standarddurchmessers und einer zweiten Aufnahme für Datenträger kleineren Standarddurchmessers aufweist.

Die Erfindung betrifft weiterhin ein System mit einem Datenträger nach einem der Ansprüche 1 bis 68 und mit zugeordneten Funktionsstationen.

Aus der DE-A-297 09 648.6 ist ein digitaler Datenträger bekannt, der als eine aus einer Compact-Disc (CD) bestehende Visitenkarte ausgebildet ist, deren maximale Breite 110 mm und deren maximale Höhe 70 mm nicht überschreitet. Auf der Visitenkarte sind auf einer Seite Informationen über den Absender optisch zur visuellen Betrachtung gespeichert bzw. aufgebracht und auf einer zweiten Seite sind Informationen in digitaler Form gespeichert, die in einem Standard-CD-Laufwerk mit einem optischen Lesekopf ausgelesen und anschließend weiterverarbeitet werden können.

Nachteilig dabei ist, daß eine solche von dem Standardaußendurchmesser einer Compact-Disc abweichende Visitenkarte bzw. digitaler Datenträger nur schwer in einem Standard-CD-Laufwerk mit Frontbeschickung zentrierbar ist.

Aus der DE-A-297 98 678 ist eine Abspielhilfe für unstandardisierte rundliche und/oder nicht rundliche Compact-CD's bekannt. Diese Abspiel- oder Zentrierhilfe besteht aus einer Datenträgeraufnahme, die in ihrem Außendurchmesser dem Standardaußendurchmesser einer Compact-CD entspricht und weist eine Innenform auf, in die der nicht standardisierte digitaler Datenträger eingesetzt und zusammen mit der Zentrierhilfe in eine ausfahrbare Schublade eines Standard-CD-Laufwerkes eingelegt werden kann.

Nachteilig dabei ist, daß eine zusätzliche Zentrierhilfe benötigt wird, die die Bedienung des digitalen Datenträgers erheblich erschwert.

Weiterhin ist ein digitaler Datenträger in Form einer Visitenkarte bekannt, der an seiner Unterseite vier Zentriernocken aufweist, die in eine zweite Aufnahme für eine sogenannte Mini-CD eines Standard-CD-Laufwerkes eingreift und den digitalen Datenträger in dieser Aufnahme zentriert.

Nachteilig dabei ist, daß die Aufnahmen für Datenträger kleineren Standarddurchmessers bzw. für Mini-CD's im allgemeinen einen radialen Schlitz aufweisen, so daß der mit den Zentriernocken versehene Datenträger nur in bestimmten Stellungen sicher zentriert.

Weiterhin nachteilig dabei ist, daß die nachträglich eingestanzten Zentriernocken zum einen leicht abbrechen können, so daß das Standard-CD-Laufwerk beschädigt werden kann, und zum anderen durch das nachträgliche Stanzen die Unterseite so verformt werden kann, daß die darauf angebrachten digitalen Informationen nicht mehr sicher gelesen werden können.

Weiterhin sind sogenannte Shaped-CD's bekannt, die aus einer Compact-Disc mit einem freien Umriß ausgebildet sind. Dabei müssen jedoch einige Punkte bzw. Teilstücke des ehemaligen Durchmessers bestehen bleiben, damit die sogenannte Shaped-CD in der Aufnahme für den größeren Standarddurchmesser einer Compact-CD zentriert werden kann.
Aufgabe der vorliegenden Erfindung ist es, die Zentrierhilfe eines digitalen Datenträgers mit einem von einem Standardaußendurchmesser abweichenden Umriß eines Trägerkörpers so zu verbessern, daß eine Beschädigung des digitalen Datenträgers bzw. des Standard-CD-Laufwerkes sicher vermieden und die CD leicht und sicher zentriert werden kann.

Die Aufgabe wird erfindungsgemäß dadurch gelöst, daß die Zentrierhilfe aus zwei einander gegenüberliegenden auf die zweite Aufnahme abgestimmten Ringstücken ausgebildet ist.

Durch die zwei einander gegenüberliegenden Ringstücke wird eine in jeder Stellung des digitalen Datenträgers sichere Zentrierung erreicht. Durch die sichere Zentrierung der über die ganze Breite der Unterseite verlaufen-4en Ringstücke wird zudem ein Abscheren bzw. Abbrechen der Ringstücke sicher vermieden.

Gemäß einer bevorzugten Ausführungsform der Erfindung weisen die Ringstücke einen wulstförmigen Querschnitt auf.

Durch die wulstförmige Form wird in einem gewissen Umfang eine Selbstzentrierung erreicht bzw. können Toleranzen ausgeglichen werden, so daß der zentrische Sitz eines in das Standard-CD-Laufwerk eingelegten digitalen Datenträgers verbessert wird. Die wulstförmige Form ohne scharfe Kanten vermeidet zudem ein Verkratzen übereinander gestapelter CD's.

Gemäß einer weiteren bevorzugten Ausführungsform der Erfindung bilden die Ringstücke einen Positionierungsabsatz und weisen eine Breite auf, die nach außen von einem dem kleineren Standarddurchmesser entsprechenden Außendurchmesser und nach innen von dem Innendurchmesser der Zentrierbohrung begrenzt wird.

Durch die Ausbildung der Ringstücke zu einem Positionierungsabsatz wird die mechanische Stabilität des Trägerkörpers im Bereich des Positionierungsabsatzes verbessert.

Nach einer weiteren bevorzugten Ausführungsform der Erfindung weist die Unterseite des Trägerkörpers bzw. digitalen Datenträgers Informationen in digitalisierter Form auf, die von dem Standard-CD-Laufwerk lesbar sind und auf einer der Unterseite abgewandten Oberseite Informationen in gedruckter Form zur visuellen Betrachtung auf.

Der digitale Datenträger kann damit zunächst visuell betrachtet bzw. gelesen werden, wobei seine digitalen Daten anschließend von einem Standard-CD-Laufwerk, beispielsweise eines Computers, gelesen werden können. Gemäß einer weiteren bevorzugten Ausführungsform der Erfindung weist der Trägerkörper einen optischen Speicher-Formteil und ein Funktionskarten-Formteil auf, welche in eine einstückige Doppelform integriert sind. Der Trägerkörper weist mindestens ein zusätzliches Funktionselement für eine zugeordnete Funktionsstation auf, wobei der Funktionskarten-Formteil und die Anordnung des Funktionselementes den geometrischen Randbedingungen der Funktionsstation entsprechen.
Durch Kombination der sehr großen Speicherkapazität des optischen Speicher-Formteils mit den Funktionen des Funktionskarten-Formteils, welche integriert sind in eine einstückige Doppelform, werden die Anwendungsfunktionen von Funktionskarten bekannter Art kombiniert mit der großen Informationskapazität des optischen Speichers, der zudem auch mit weitverbreiteten, kostengünstigen Laufwerken einfach zugänglich ist. Damit werden die Möglichkeiten der bekannten Funktionskarten, die durch relativ kleine Speicherkapazitäten, von z.B. nur wenigen KByte eines EEPROM mit den sehr großen optischen Speicherkapazitäten von z.B. mehr als 10 MByte kombiniert. Dies eröffnet ein riesiges Feld von kombinierten Anwendungen mit dem neuen Datenträger in Doppelform. Mit dem erfindungsgemäßen Datenträger wird auch das schwierige Problem gelöst, das in den ganz unterschiedlichen, bzw. gegensätzlichen oder sich sogar ausschließenden Anforderungen liegt, welche an einen optisch lesbaren Datenträger einerseits und an Funktionskarten andererseits gestellt werden.

Im wesentlichen müssen optisch lesbare Datenträger und damit der optische Speicher-Formteil mechanisch relativ massiv, stabil und absolut plan ausgebildet sein und eine ungestörte, einwandfreie optische Ablesung ermöglichen, während Funktionskarten (z.B. Kreditkarten) relativ dünn und flexibel ausgebildet sind, wobei sie im Gebrauch und durch das ständige Mitführen beim Karteninhaber leicht auch verbogen werden können und wobei sie jedoch die Randbedingungen, insbesondere die Führung oder Positionierung der Funktionskarte in der zugeordneten Funktionsstation erfüllen müssen, z.B. auch die Positionierung der Funktionselemente auf der Karte relativ zur Funktionsstation. Dieses Problem löst der erfindungsgemäße Datenträger mit dem Positionierungsabsatz und der Ausbildung in Doppelform, so daß der optische Speicher-Formteil bezüglich seiner mechanischen und optischen Eigenschaften den Lesebedingungen der optischen Lesegeräte entspricht und insbesondere auch vollständig ausgewuchtet ist bezüglich des zentralen Innenlochs bzw. der Zentrierbohrung und wobei die Gestaltung des Funktionskarten-Formteils den Randbedingungen der Funktionsstation entspricht und die Schichtdicke außerhalb des Positionierungsabsatzes bzw. des optischen Formteils dünner und damit auch flexibler ausgebildet ist, während der optische Bereich stabil bleibt.

Die abhängigen Ansprüche betreffen insbesondere Weiterbildungen und vorteilhafte Ausführungsvarianten der Erfindung mit höheren Speicherkapazitäten, besseren Handhabungseigenschaften, erweiterten Funktionen und Anwendungen.

Durch die Verwendung eines Chips (Kontakt-Chip, berührungsloser Chip, biochemischer Chip, KugeI-Chip, Speicher-Chip oder elektronischer Chip) als zusätzliches Funktionselement wird der Anwendungsbereich erweitert. Der Einsatz eines solchen Chips wird an dem folgenden Beispiel erläutert:

Nehmen wir einmal an, der Datenträger bzw. die Karte enthält als Information im optischen Speicherbereich ein vielfältiges Angebot an möglichen Sportanlässen und Aktivitäten bereit. Zum Beispiel Skigebiete, Hallenbäder, Fußballstadien mit den Spielen, die während der kommenden Saison abgehalten werden. Alle diese Daten sind in dem optisch lesbaren Speicherbereich enthalten und können zusammen mit Informationen, die via Internet Link zusätzlich abgerufen werden können, gelesen werden. Der Anwender oder rechtliche Besitzer der Karte kann nun das Angebot sichten und sich die Aktivitäten am heimischen PC aussuchen und eine Liste zusammenstellen. Danach schaltet er eine Verbindung zum Internet mit der auf der Karte befindlichen Software und bucht die ausgewählten Sportanlässe und Aufenthalte in den Skiorten. Die eingelegte Karte verfügt beispielsweise über einen berührungslosen Speicher-Chip. Bei der Übergabe der Karte war ein Nummern-Code unter einen speziellen abrubbelbaren Schicht verborgen, den nun der Anwender kennt. Diese Nummer gibt er nun nach seiner Bestellung über das Internet ebenfalls ein und berechtigt nun so "seine Karte" als Eintrittskarte bei den gebuchten Veranstaltungen und Sportaktivitäten wie Skilift etc.. Die Anreise zu den gewählten Aktivitäten könnte nun folgendermaßen aussehen. Der Kartenbesitzer geht zum Bahnhof und wartet seinen Zug ab. Die Abfahrtszeiten wurden ihm per E-Mail nachdem die Bezahlung über das Internet mit der Kreditkarte (die auch in der vorliegenden Karte integriert sein könnte) durchgeführt hatte. Auch sind ihm nun die Ankunftszeit und Verbindungen zu seinem Reiseziel bekannt. Natürlich hat er auch ein Hotelzimmer gleich mitbestellt. Nun kommt sein Zug angefahren und der Kartenbesitzer steigt ohne eine Fahrkarte zu lösen in den Zug. Natürlich waren an den Eingangstüren des Zuges sogenannte Antennen, die überprüfen, ob der Speicher-Chip, den der Kartenbesitzer auf seiner Karte hat auch den Kartenbesitzer zu einer Fahrt in diesem Zug berechtigen. Es erübrigt sich fast zu erwähnen, daß im Zug auch selber die Plätze nicht mehr numeriert sind, sondern die Namen gleich angeschrieben stehen, und daß auch aufgrund des Speicher-Chips überprüft wird, daß auch der richtige Kartenbesitzer an diesem Platz sitzt. Nach zweimaligem Umsteigen, der Kartenbesitzer wurde jeweils zur richtigen Zeit persönlich an seinem Platz durch eine Computerstimme informiert, gelangt er an sein Reiseziel. Das Hotel ist über die Ankunft schon unterrichtet und auch, daß der Zug mit dem Kartenbesitzer etwas Verspätung hat. Natürlich hat das Hotel auch ein mit Leuchtziffern angeschriebenes Taxi am Bahnhof, das den Kartenbesitzer abholt und im Fahrgastraum wird der Kartenbesitzer mit einem freundlichen "Hallo ..." begrüßt. Im Hotel angekommen wird dem Kartenbesitzer das gebuchte Zimmer zugewiesen, dessen Schlüssel er schon auf der Karte hat. Der Speicher-Chip öffnet ohne irgendeine Berührung die Zimmertüre und der Gast kann sich wie zu Hause fühlen. Am nächsten Morgen wird der Kartenbesitzer rechtzeitig geweckt, damit er das spannende Fußballmatch am Sonntag im Station nicht verpaßt und natürlich steht das Taxi auch schon bereit vor der Hoteleingangshalle, nachdem er das am PC bestellte Frühstück eingenommen hat. Daß der Kartenbesitzer am Drehkreuz zum Fußballstation einfach durchgehen kann, versteht sich nun von selbst.

Die Reflexionsschicht des optisch lesbaren Speicherbereiches, die aus Gold, Silber, Kupfer, Aluminium oder ähnlichen in der CD-ROM-Produktion bekannten Metallen ausgebildet ist und aufgedampft wurde, kann als Antenne beim Einsatz eines berührungslosen Chips oder von Elektronikbausteinen, die als Empfänger oder Sender genutzt werden und eingesetzt werden. Dazu wird eine Verbindung zwischen dem eingesetzten Chip oder Elektronikbaustein benötigt, die durch Verlöten, Verleimung oder Punktierverschmelzung oder durch eine andere bekannte Art der Verbindungstechnik zustande kommt. Im Zusammenspiel mit dem berührungslosen Speicher-Chip oder einem sendenden bzw. empfangenden Elektronikmodul, wird in den meisten Fällen eine Antenne benötigt. Durch die große Fläche der Reflexionsschicht ist ein Empfangen und Senden von Signalen sehr gut möglich. Gleichzeitig kann die Metallbeschichtung mit einer zusätzlichen Metallschicht verstärkt werden, die auf der bestehenden Reflexionsschicht aufgesetzt wird. Ob zwischen den verschiedenen Schichten eine Isolierschicht angebracht werden muß oder nicht, ist abhängig davon, welcher berührungslose Chip eingesetzt wird.

Es können beliebige elektronische Bausteine für verschiedene Anwendungen und Aufgaben an beliebiger Stelle auf der Karte vorkommen und angebracht bzw. eingegossen werden, die von einer internen, in der Beschichtung angebrachten Batterie oder durch eine externe Batterie (z. B. eingelegt als Mikrozelle im Innenbereich) Strom beziehen oder durch aufgebrachte Solarzellen die nötige Energie bekommen oder ohne Energiequellen von der Karte arbeiten, z. B. durch Reflexion der zur Karte gesendeten Funk- oder Energiewellen.

Ein eingesetzter elektronischer Baustein sei am folgenden Beispiel erläutert:

Michael J. hat gerade einen neuen Song geschrieben, der natürlich auffällig in den Regalen von Musikgeschäften plaziert werden soll. Um dies zu erreichen, wird ein Teil des Songs oder auch der ganze Song auf der Karte bzw. dem Datenträger als Werbegag gespeichert. Da es natürlich erst recht auffällt, wird im Zentrum (nicht Bedingung) ein kleiner Elektronikbaustein angebracht, der wiederum drei kleine Leuchtdioden oder ähnliche Leuchtquellen ansteuert. Die Batterie wurde durch Aufbringen verschiedener dünner Metallschichten auf der Unterseite der Karte, in den von den optisch lesbaren Daten nicht beanspruchten Bereichen, angebracht. Das Aufladen der Batterie übernimmt eine auf der Oberseite im Innenbereich angebrachte Minisolarzelle. Durch das Berühren einer auf dem Elektronikbaustein angebrachten Fotozelle leuchten die kleinen Lämpchen auf und die ganze Karte leuchtet an den Rändern oder sonstig glasklaren Stellen, die an einer beliebigen Stelle so geformt sein können, daß sie das Leuchten noch verstärken. Der optische Werbefeldzug des neuen Songs kann somit beginnen. Dieses Verfahren kann, wie auch das der anderen auch auf einer ganz normalen bekannten CD-ROM angewendet werden.

Es können auch elektronischen Schaltungen direkt auf der Karte bzw. auf dem Datenträger an beliebiger Stelle angebracht werden. Z. B. um eine Schaltung so anzubringen, daß sie auf der ganzen Fläche oder auf Teilen der gesamten Fläche auf oder in der Karte angebracht ist. Dies ermöglicht den Einsatz der Karte z. B. als kleiner Radioempfänger mit kleinem Flachlautsprecher, der als Beschichtungselement, ähnlich wie in den Uhren, eingesetzt werden kann. Der elektronische Baustein kann sehr klein in der Mitte des Trägerkörpers angebracht werden. Die Batterien können aus der Beschichtung bestehen, die auf der Kartenunterseite angebracht wird. Der Lautsprecher kann beispielsweise auf der Oberseite des Trägerkörpers als Beschichtungselement angeordnet sein. Durch das Aufbringen von verschiedenen Schichten auf den Trägerkörper, z. B. auch Fotolack, kann eine komplette Schaltung, wie dies auch bei dem Elektronik-Chip der Fall ist, direkt in den aufgebrachten Schichten untergebracht werden. Dies ist z. B. dann sinnvoll, wenn die Karte als Schlüssel Verwendung findet und ein Entfernen der Elektronik-Schaltung verhindert werden soll. Eine so aufgebrachte Schaltung kann niemals ohne Zerstörung derselben von der Karte entfernt werden. Natürlich kann man dann auch komplexere Schaltungen, die anderweitig als zum Schutz der Karte Verwendung finden, auf der Karte anbringen. So ist es z. B. möglich, einen kleinen Radioempfänger auf dem Trägerkörper selbst aufzubringen oder in Verbindung mit einer digitalen Anzeige (Flüssigkristallanzeige) eine Uhr in den Innen- oder Außenbereich zu implementieren.

Es können an beliebiger Stelle auf und unter dem Trägerkörper Solarbausteine oder Solarmodule teilweise oder ganzflächig angebracht werden. Beispielsweise zur Energiegewinnung der auf dem Trägerkörper befindlichen Elektronikbaussteine oder Chips. Zur Spannungsversorgung können herkömmliche Mikrozellen, die verteilt im Innenbereich oder auch Außenbereich des Trägerkörpers angebracht werden können, verwendet werden. Die Batterien werden so plaziert, daß eine Unwucht beim Drehen des Trägerkörpers vermieden werden kann. Durch das Aufbringen geeigneter Schichten auf der Ober- oder Unterseite des Trägerkörpers kann eine sehr flache Batterie aufgebracht werden, die dann auf die Solarzellen aufgeladen werden kann. Es ist aber auch möglich, die angebrachten elektronischen Elemente direkt durch Solarzellen zu versorgen.

Weiterhin ist es möglich, sogenannte Mikrokameras und Objektive am Trägerkörper anzuordnen, die Daten aufnehmen und in einem Speicher-Chip ablegen können. In Verbindung mit einem optisch lesbaren Teil, z. B. einer LCD oder Flüssigkristallanzeige kann auf den Datenträger z. B. ein Adressbuch hinterlegt werden, das über den Bildschirm modifiziert werden kann. Das Abrufen der Daten erfolgt über eine Art Tastatur, die mit verschiedenen aufgebrachten Schichten auf der Ober- oder Unterseite des Trägerkörpers erzeugt wird. Die entsprechende Schaltung ist dabei ausgewuchtet konstruiert und angeordnet.

Eine elektronische Schaltung mit Flüssigkristallanzeige kann an einer beliebigen Stelle des Trägerkörpers angebracht werden. Mit der Flüssigkristallanzeige ist es so möglich, Daten aufzurufen, die auf der Karte optisch lesbar sind. Beispielsweise kann ein Kartenbesitzer wichtige Daten verschlüsselt auf einer recordablen Karte bzw. Datenträger erhalten, die nur für ihn bestimmt sind. Er legt nun den Datenträger in sein PC-Laufwerk ein und startet die darauf befindliche Applikation. Diese fragt nach einem Sicherheitscode, den nur der Kartenbesitzer kennt. Nach dessen Eingabe wird ein Signal vom PC an den berührungslosen Chip des Datenträgers abgestrahlt und dieser wiederum erzeugt einen sichtbaren Code auf der LCD oder Flüssigkristallanzeige. Die Karte kann nun aus dem PC entnommen werden und der Code z. B. dann am benötigten Eingabegerät eingegeben werden.

Weiterhin kann an einer beliebigen Stelle ein Infrarotsender oder -empfänger angebracht werden, der Daten aufnimmt und Daten senden kann, um mit Geräten jeglicher Art, die auch mit solchen Sendern und Empfängern ausgerüstet sind, zu kommunizieren. Dadurch wird eine Kommunikation zwischen Karte bzw. Datenträger und anderen Eingabe- bzw. Ausgabegeräten auf einfache Art und Weise möglich.

Weiterhin können an beliebiger Stelle, auf und in dem Trägerkörper Sicherheitsmerkmale angebracht werden, die sowohl visuell, maschinell oder optisch erfaßt oder ausgewertet werden können. Die Sicherheitsmerkmale können auf der Oberfläche oder auch im Datenträger selbst (eingespritzt, eingeschossen) angebracht sein. Diese dient zur Erkennung und Eliminierung von Fälschungen oder aber zur eindeutigen Identifizierung des Datenträgers selbst. So können unsichtbare oder sichtbare Barcodes und Ziffern angebracht werden, die im Zusammenhang mit den auf der Karte befindlichen Daten für gewisse Zugriffsrechte eingesetzt werden können oder aber auch kleine elektronische Schaltungen oder aber auch kleine Gegenstände, wie Mikroglaskugeln, die eine kleine Nummer eingesetzt haben, wie das bei Diamanten beispielsweise gemacht wird.

Die Unterseite des Trägerkörpers kann auch verschiedene Metall- oder Nichtmetallbeschichtungen aufweisen, die den Laservorgang der Karte bzw. des Kartenträgers nicht beeinträchtigen. Z. B. kann ein fluoreszierende Schicht verwendet werden, um einen auffälligen optischen Effekt zu erzeugen. Die Innen- oder Außenbereiche des Trägerkörpers können durch Aufbau von verschiedenen dünnen Beschichtungen zu einer Batterie aufgebaut werden. Es kann auch eine elektrostatische Schicht aufgebracht werden, die zum Erfassen von Ton- oder Bilddaten an geeigneten Geräten genutzt wird.

Weiterhin kann auch eine Magnetschicht als Band in beliebiger Breite aufgebracht werden, um Daten zu speichern. Durch verschiedene dünne Schichten, die aufeinander oder nebeneinander liegen können, werden Elektronik-Bausteine gestaltet und direkt auf dem Trägerkörper angeordnet.

Der Trägerkörper kann mehrfache Legierungen in Schichten oder nebeneinander aufweisen, die aus verschiedensten metall- oder nichtmetallhaltigen Materialien bestehen. Auf der Unterseite des Trägerkörpers kann ein unsichtbarer harter Schutzlack angebracht werden, der ein Verkratzen der Unterseite erschwert oder verhindert. Dadurch kann der Trägerkörper auch ohne Stapelring unbeschädigt transportiert und auf der optischen lesbaren Seite abgelegt werden.

Die Öffnung im Innenbereich des Trägerkörpers, die Zentrierbohrung muß nicht von Anfang an zentriert sein. Sie kann praktisch an einer beliebigen Stelle der Karte so angebracht werden, daß z. B. nach dem Abbrechen eines vorbehandelten Kartenbereiches die Zentrierbohrung zentral liegt oder aber durch Lack-, Farb- oder Beschichtungsauftrag der Trägerkörper ausgewuchtet wird. Es können auch kleine Gewichte an den Seiten des Trägerkörpers angebracht werden, die vom Gewicht her leichter sind, als die gegenüberliegenden Seiten, um eine Auswuchtung des Trägerkörpers zu erzielen.

Auf und in dem Trägerkörper können Spulen aus Draht oder aus einer Beschichtung angeordnet sein, die als Antenne zum Empfang von Signalen oder zum Senden von Signalen verwendet werden können. Dies ist besonders vorteilhaft beim Einsatz von berührungslosen Chip-Systemen. Es können auch verschiedene Spulentypen auf und in dem Trägerkörper angebracht werden, um verschiedene Funktionen ausüben zu können. Die Spule kann aus einem metall- oder einem metallähnlichen Material sein, z. B. aus Kupfer, Messing, Eisen, Ferrit, Gold, Silber etc. oder aber auch aus einem leitenden oder nichtleitenden Kunststoff.

Gemäß einer weiteren bevorzugten Ausführungsform der Erfindung ist der Trägerkörper als Visitenkarte mit einem im wesentlichen rechteckigen Umriß ausgebildet.

Dadurch ist es möglich, zu den üblichen Informationen einer Visitenkarte digitalisierte Informationen hinzuzufügen, die beispielsweise in einem Computer gelesen werden können. Bei diesen Informationen kann es sich um audio oder audiovisuelle Aufzeichnungen oder beispielsweise um Kataloge und ähnliches handeln.

Gemäß einer weiteren bevorzugten Ausführungsform der Erfindung ist der Trägerkörper als Eintrittskarte ausgebildet und weist an seinem Umfang mindestens einen abtrennbaren Entwertungsabschnitt auf.

Durch die Verwendung eines digitalen Datenträgers als Eintrittskarte können auch hier zusätzliche computerlesbare Informationen aufgebracht sein. Auch ist es so beispielsweise möglich, Bildsequenzen oder Hörproben von Musikstücken aufzuzeichnen.

Nachteilig bei dem bekannten Verfahren zur Herstellung eines digitalen Datenträgers durch Einstanzen einer Zentrierhilfe ist, daß der Stanzvorgang relativ langsam ablaufen muß, um kein Durchbrechen der Zentrierhilfe in Form von Zentriernocken zu erzielen.

Weiterhin nachteilig dabei ist, daß die digitalen Informationen während des Stanzvorganges beschädigt werden können.

Es können daher, das Herstellverfahren und insbesondere die Qualität verbessert und die Herstellzeit und die Herstellkosten verringertwerden, indem die Ringstücke durch Hochdruckspritzen des Trägerkörpers in einem die Ringstücke als Negativform aufweisenden Spritzwerkzeug hergestellt werden.

Dadurch ist es möglich, den Trägerkörper und die Ringstücke in einem Arbeitsgang herzustellen und das Herstellverfahren dadurch zu beschleunigen und gleichzeitig eine Beschädigung der im gleichen Arbeitsgang aufgebrachten digitalen Informationen zu vermeiden.

Das Spritzgußwerkzeug kann eingearbeitete Ringstücke als Negativform aufweisen.

Durch die eingearbeiteten Ringstücke als Negativform kann der Trägerkörper in üblicher Weise durch Hochdruckspritzen hergestellt werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

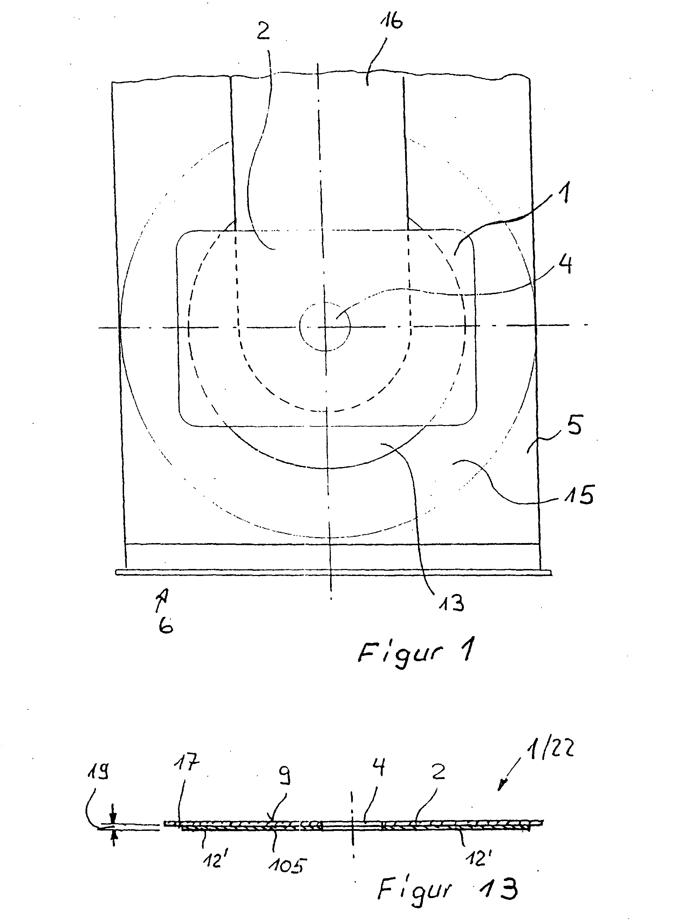

- Figur 1:: Eine Draufsicht auf eine ausgefahrene Schublade eines Standard-CD-Laufwerkes mit eingelegtem digitalen Datenträger in verkleinerter Darstellung,

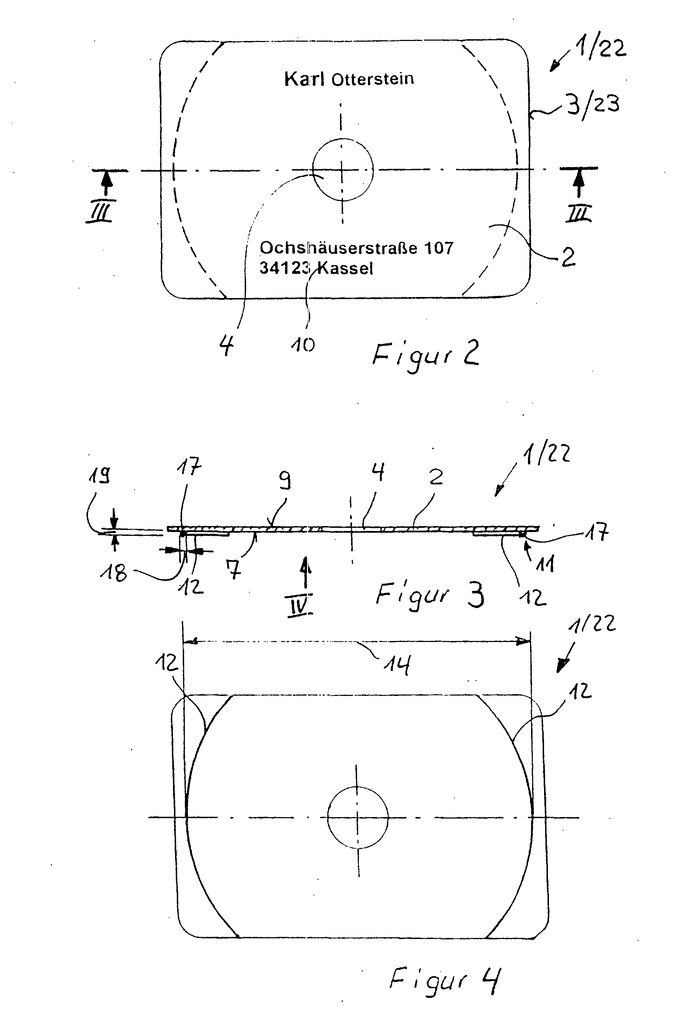

- Figur 2:: eine Draufsicht auf einen als Visitenkarte ausgebildeten digitalen Datenträger,
- Figur 3:: eine Vorderansicht des digitalen Datenträgers von Figur 2, entlang der Linie III - III geschnitten,

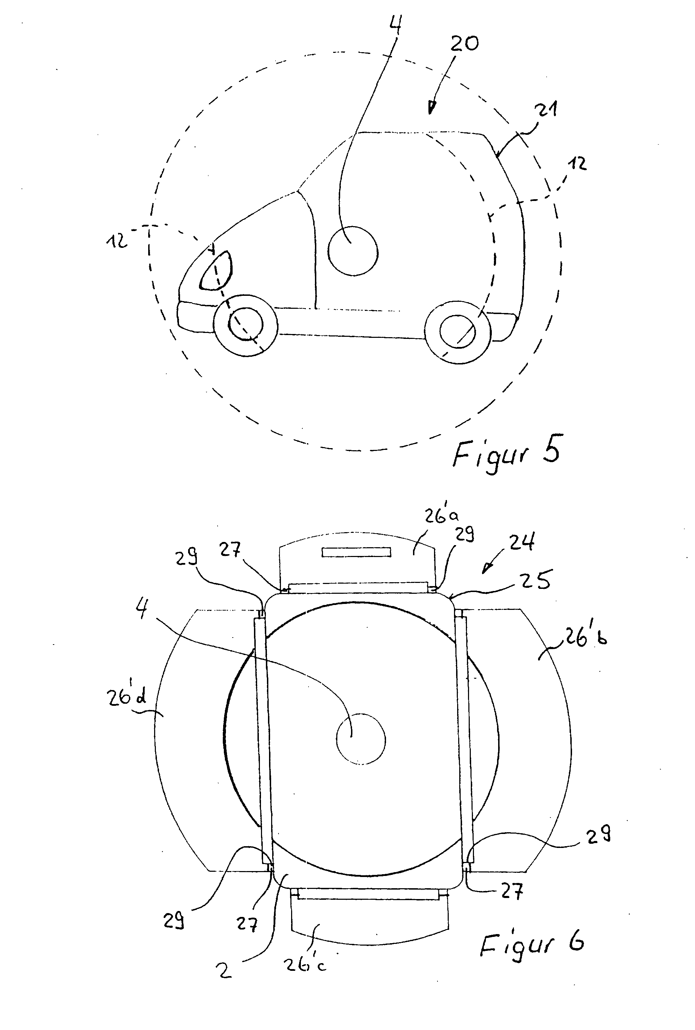

- Figur 4:: eine Untersicht unter den digitalen Datenträger von Figur 3 aus Richtung IV,
- Figur 5:: eine Draufsicht auf einen als Shaped-CD ausgebildeten digitalen Datenträger,
- Figur 6:: eine Untersicht unter einen als Eintrittskarte ausgebildeten digitalen Datenträger mit vier entfernbaren Entwertungsabschnitten,

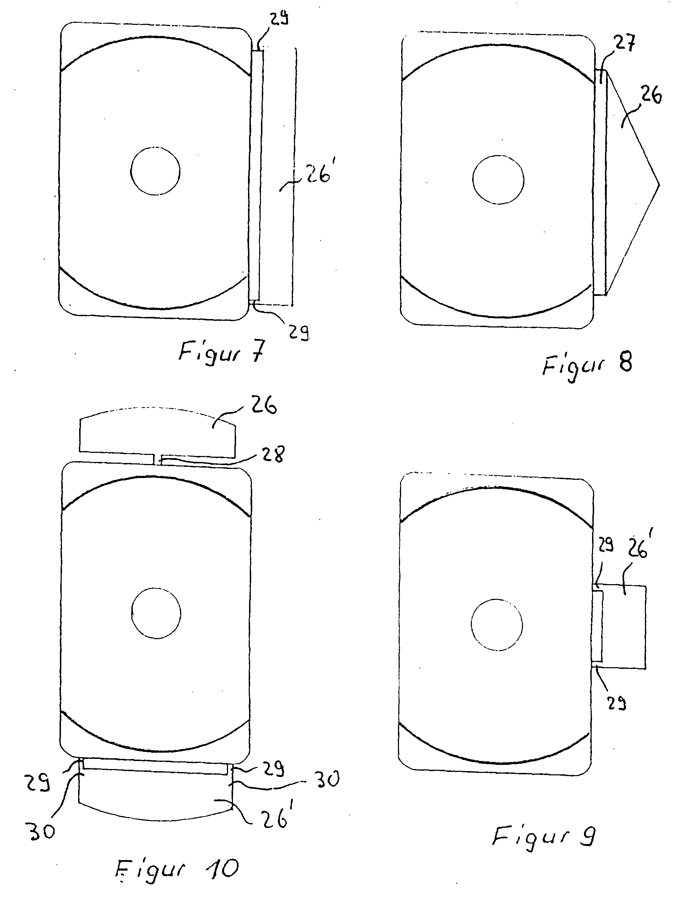

- Figur 7:: eine Untersicht unter einen als Eintrittskarte ausgebildeten digitalen Datenträger mit einem Entwertungsabschnitt,
- Figur 8:: eine Untersicht unter einen weiteren als Eintrittskarte ausgebildeten Datenträger mit einem Entwertungsabschnitt,
- Figur 9:: eine Untersicht unter einen weiteren als Eintrittskarte ausgebildeten digitalen Datenträger mit einem Entwertungsabschnitt an einer Längsseite,

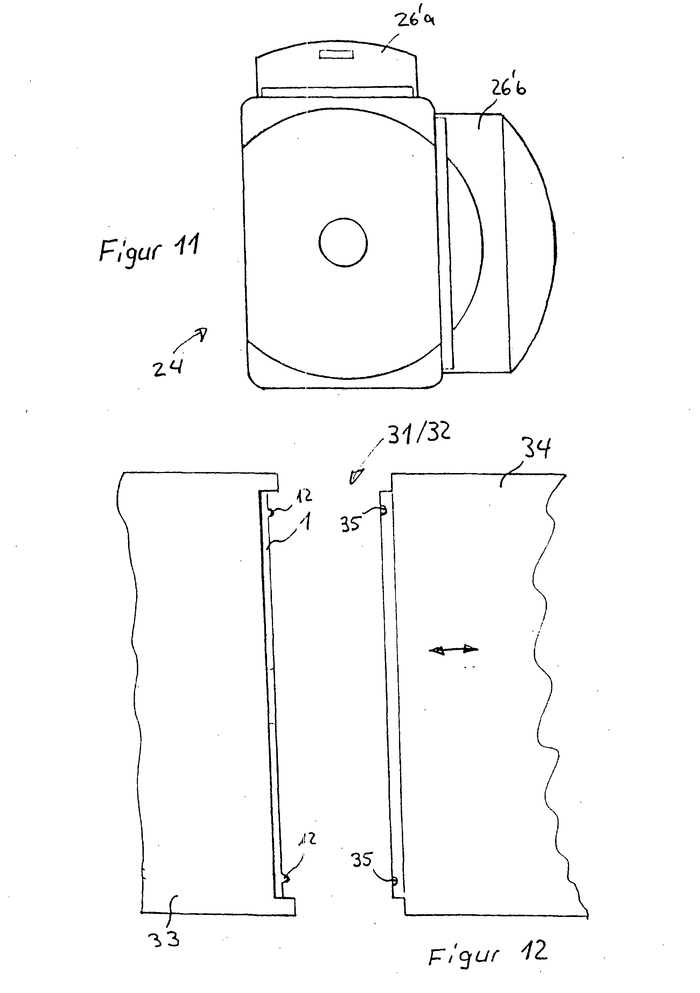

- Figur 10:: eine Untersicht unter einen als Eintrittskarte ausgebildeten digitalen Datenträger mit zwei an seinen schmalen Seiten ausgebildeten Entwertungsabschnitten,
- Figur 11:: eine Untersicht unter einen als Eintrittskarte ausgebildeten digitalen Datenträger mit zwei Entwertungsabschnitten,
- Figur 12:: eine schematische Seitenansicht eines Spritzgußwerkzeuges mit herausgefahrener Matrize im Schnitt,
- Figur 13:: eine Vorderansicht eines digitalen Datenträgers mit Ringstücken, die einen ebenen Positionierungsabsatz bilden, entlang der Linie III - III von Figur 2 geschnitten,
- Figur 14:: eine Untersicht unter einen digitalen Datenträger mit optischem Speicher-Formteil und Funktionskarten-Formteil in Doppelform,
- Figur 15:: eine Vorderansicht des digitalen Datenträgers von Figur 14 entlang der Linie XV - XV geschnitten,
- Figur 16:: eine Vorderansicht eines zweiteiligen digitalen Datenträgers entlang der Linie XV - XV von Figur 14 geschnitten,
- Figur 17:: eine Untersicht unter das Speicher-Formteil des digitalen Datenträgers von Figur 14,
- Figur 18:: eine Untersicht unter das Funktionskarten-Formteil des digitalen Datenträgers von Figur 14,
- Figur 19:: eine Untersicht unter einen digitalen Datenträger mit über die Breite des Funktionskarten-Formteil hinausragenden Durchmesser des optischem Speicher-Formteil,
- Figur 20:: eine Untersicht unter einen kreisförmigen Speicher-Formteil,
- Figur 21:: eine Untersicht unter einen digitalen Datenträger mit dem optischem Speicher-Formteil von Figur 20 und Positionierungsabsätzen bzw. Ringstücken im Funktionskarten-Formteil,
- Figur 22:: eine Seitenansicht des digitalen Datenträgers von Figur 21 entlang der Linie XXI - XXI geschnitten,
- Figur 23:: eine Vorderansicht einer einteiligen Doppelform eines digitalen Datenträgers mit Positionierungsabsatz und mit Funktionselementen im Schnitt und Ausriß,
- Figur 24:: eine Vorderansicht einer zweiteiligen Doppelform eines digitalen Datenträgers mit Positionierungsabsatz und mit Funktionselementen im Schnitt und Ausriß,
- Figur 25:: eine Vorderansicht einer zweiteiligen Doppelform eines digitalen Datenträgers mit Positionierungsabsatz im Funktionskarten-Formteil im Schnitt und Ausriß,
- Figur 26:: eine Draufsicht auf einen digitalen Datenträger mit einem berührungslosen Identifikationsmedium als Funktionselement,
- Figur 27:: eine Vorderansicht des digitalen Datenträgers von Figur 26 im Schnitt,
- Figur 28:: eine Untersicht unter einen digitalen Datenträger mit zusätzlichen optischen Datenbereichen,
- Figur 29:: eine Vorderansicht eines einteiligen DVD-Datenträgers in Doppelform im Schnitt,
- Figur 30:: eine Vorderansicht einer zweiteiligen Doppelform mit DVD-Datenträger im Schnitt,
- Figur 31:: eine Draufsicht auf einen digitalen Datenträger im Mini-CD-Format,
- Figur 32:: ein System mit erfindungsgemäßen Datenträgern und zugeordneten Funktionsstationen und optischen Lesestationen und
- Figur 33:: ein System mit Telefonkarten-Datenträgern und zugeordneten Telefonstationen.

Ein digitaler Datenträger (1) besteht im wesentlichen aus einem Trägerkörper (2) mit einem von einem Standardaußendurchmesser einer sogenannten Compact-Disc von 120 mm abweichenden Umriß (3). In seiner Mitte weist der Trägerkörper (2) eine bei CD's bzw. Mini-CD's übliche Zentrierbohrung (4) auf.

An seiner einer Schublade (5) eines Standard-CD-Laufwerkes (6) zugewandten Unterseite (7) weist der Trägerkörper (2) Informationen in digitalisierter Form auf, die von einem nicht dargestellten optischen Lesekopf des Standard-CD-Laufwerkes (6) lesbar sind. Eine der Unterseite (7) abgewandte Oberseite (9) kann Informationen (10) in aufgedruckter Form zur visuellen Betrachtung aufweisen.

Die Unterseite (7) weist eine Zentrierhilfe (11) aus zwei einander gegenüberliegenden Ringstücken (12) auf. Die Ringstücke (12) sind in ihrem Außendurchmesser (14) auf eine zweite Aufnahme (13) der Schublade (5) zur Aufnahme einer sogenannten Mini-CD abgestimmt. Der Außendurchmesser (14) entspricht somit dem kleineren Standarddurchmesser einer Mini-CD von 80 mm.

Konzentrisch zur zweiten Aufnahme (13) weist die Schublade (5) eine erste Aufnahme (15) mit einem auf die Compact-CD abgestimmten Innendurchmesser auf. Üblicherweise weisen die Schubladen (5) in ihrer Längsrichtung einen u-förmigen Einschnitt (16) auf.

Das Ringstück (12) erhebt sich wulstartig auf der Unterseite (7). Damit weist das Ringstück (12) einen konvex geformten Querschnitt (17) auf. Die Breite (18) des Querschnittes (17) beträgt etwa 0,5 mm und eine Höhe (19) des Querschnittes (17) beträgt etwa 0,8 mm.

Nach einer Ausführungsform ist der Trägerkörper (2) als sogenannte Shaped-CD (20) mit einem freien Umriß (21) ausgebildet.

Nach einer anderen Ausführungsform ist der Trägerkörper (2) als Visitenkarte (22) mit einem im wesentlichen rechteckigen Umriß (23) ausgebildet.

Nach einer weiteren Ausführungsform ist der Trägerkörper (2) als Eintrittskarte (24) ausgebildet. Der Trägerkörper (2) bzw. die Eintrittskarte (24) weist dabei an ihrem Umfang (25) mindestens einen abtrennbaren Entwertungsabschnitt (26, 26') auf. Der Entwertungsabschnitt (26',26'') weist zum Trägerkörper (2) hin eine vorgeformte Bruchrille (27) auf. Der Entwertungsabschnitt (26) ist über einen Steg (28) mit dem Trägerkörper (2) verbunden. Es ist aber auch möglich, den Entwertungsabschnitt (26') über 2 Stege (29) mit dem Trägerkörper (2) zu verbinden. Die beiden Stege (29) sind an den äußeren Enden (30) der Entwertungsabschnitte (26') angeordnet. Der Trägerkörper (2) kann einen Entwertungsabschnitt (26, 26') an einer Seite, zwei Entwertungsabschnitte (26a', 26b') an zwei Seiten, drei Entwertungsabschnitte (26a', 26b', 26c') an drei Seiten oder vier Entwertungsabschnitte (26a', 26b', 26c', 26d') an seinen vier Außenseiten aufweisen. Es ist aber grundsätzlich auch möglich an einer Außenseite zwei Entwertungsabschnitte anzuordnen.

Eine Spritzgußform (31) zur Herstellung des digitalen Datenträgers (1) bzw. dessen Trägerkörpers (2) besteht im wesentlichen aus einem zweiteiligen Spritzgußwerkzeug (32), daß ein erstes Formteil (33) und ein zweites, die Matrize enthaltendes Formteil (34) aufweist. Matrizenseitig weist das zweite Formteil (34) eingearbeitete Ringstücke (35) als konkave Negativform der Ringstücke (12) auf. Die digitalen Informationen sind ebenfalls als Negativform in Form von sogenannten Lands und Pits auf der Matrize angeordnet.

Zur Herstellung wird Kunststoff unter Hochdruck in das erste Formteil (33) eingepreßt und gegen die Matrize des zweiten Formteiles (34) geschleudert. Anschließend wird die Matrize bzw. das zweite Formteil (34) zurückgezogen und der geformte Trägerkörper (2) entfernt.

In einem weiteren Arbeitsschritt wird der Trägerkörper (2) mit einer üblichen Aluminiumschicht beschichtet und anschließend lackiert. Zum Schluß wird die Oberseite (9) bzw. die Vorderseite des digitalen Datenträgers mit Informationen (10) bedruckt. Der fertige digitale Datenträger (1) kann dann so in ein Standard-CD-Laufwerk (6) beispielsweise eines nicht dargestellten Computers eingelegt werden, daß seine Ringstücke (12) in der zweiten Aufnahme (13) der Schublade (5) den Trägerkörper (2) zentrieren.

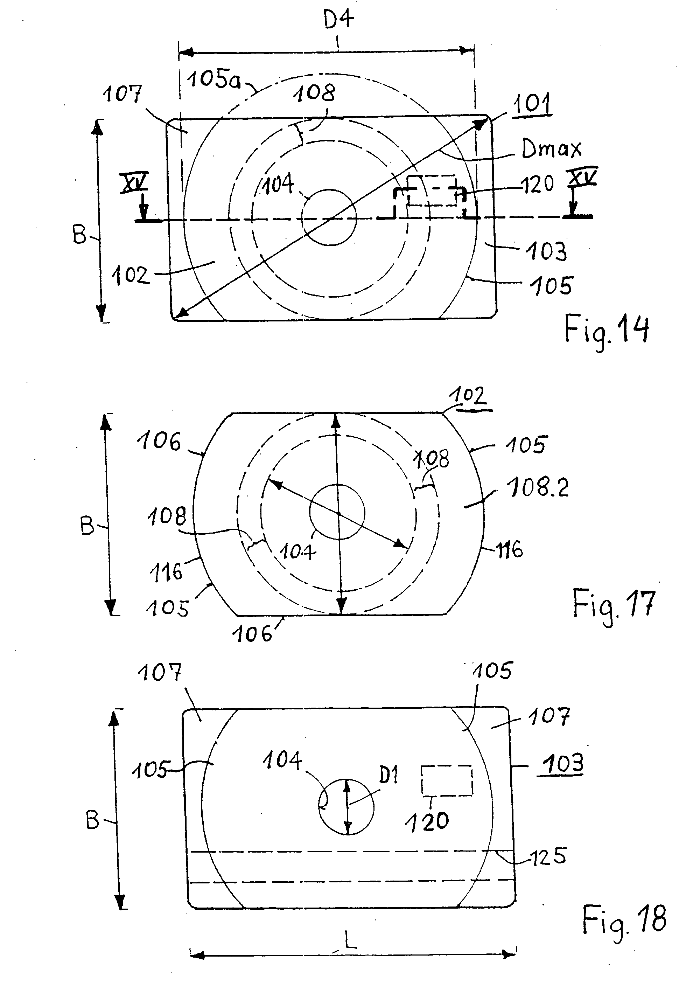

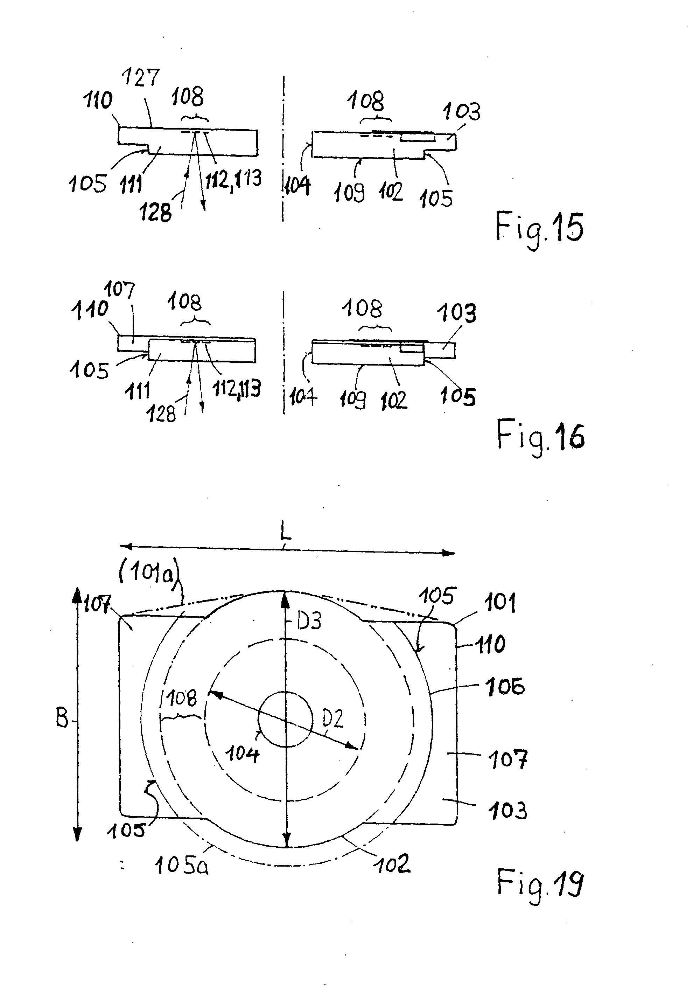

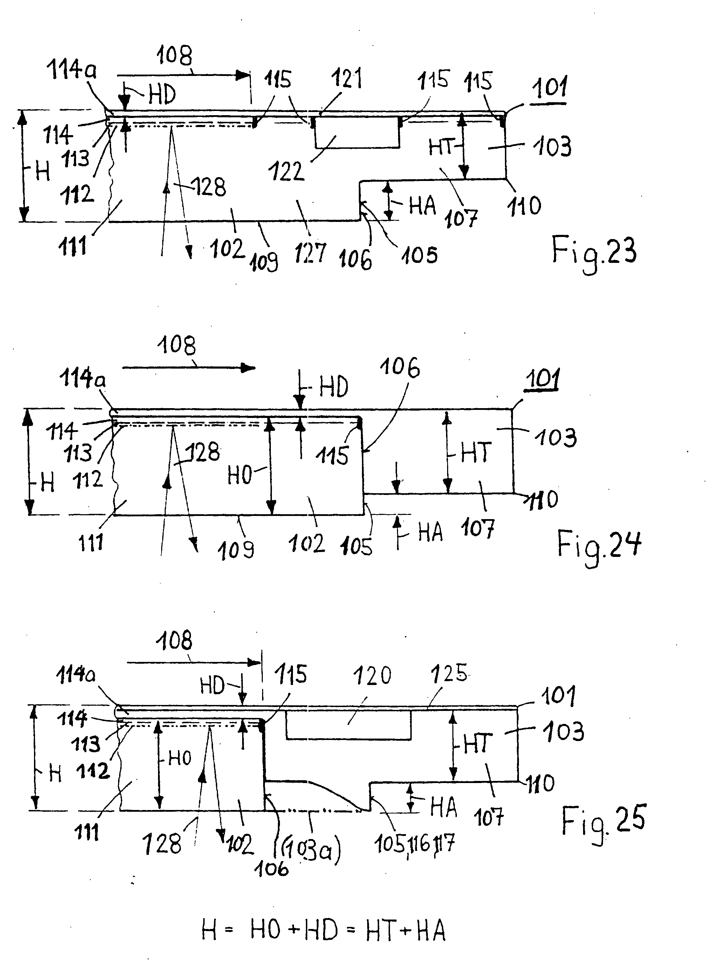

Fig. 14 zeigt, von untere betrachtet, d.h. in Richtung der optischen Ablesung 28 (Fig. 15), einen erfindungsgemäßen Datenträger 101 in Kartenformat mit einer einstückigen Doppelform 110 mit zentraler Zentrierbohrung bzw. Innenloch 104, die sich zusammensetzt aus einem optischen Speicher-Formteil 102 gemäß Fig. 17 und einem Funktionskarten-Formteil 103 gemäß Fig. 18. Der größte Durchmesser Dmax des Trägerkörpers bzw. Datenträgers 101 beträgt mehr als 81 mm, d.h. er reicht über den Aufnahmekreis 105a mit ca. 80 mm Durchmesser eines optischen Lesegerätes für Mini-CD-Format hinaus. Das Beispiel von Fig. 14 entspricht z.B. dem weitverbreiteten ISO-Scheckkarten/Chipkarten-Format mit B x L = 54 x 86 mm. Der optische Speicher-Formteil 102 weist mindestens einen kreisringförmigen optisch lesbaren Speicherbereich 108 auf mit einer optische Trägerschicht 111, einer Datenschicht 112 und einer Reflexionsschicht 113 (wie in Fig. 23 erläutert wird).

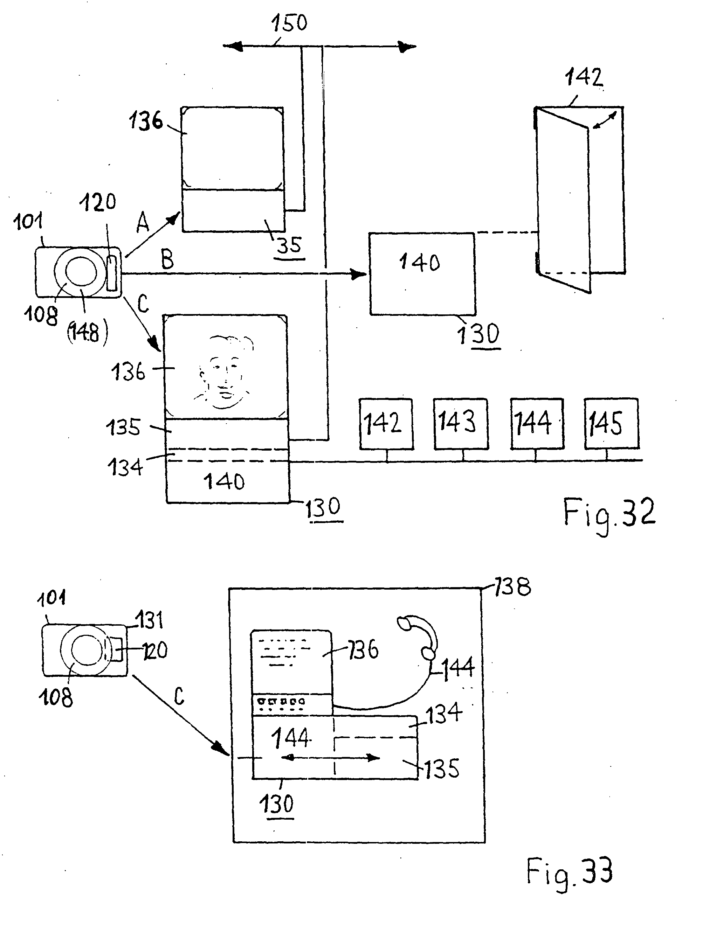

Der Speicherbereich 108 weist einen inneren Durchmesser D2 und einen äußeren Durchmesser D3 auf. Um einen großen Speicherbereich zu erreichen, entspricht der Durchmesser D3 vorzugsweise annähernd der Kartenbreite B. Die einstückige Doppelform 110 des Datenträgers 101 weist einen Positionierungsabsatz 105 auf zur Aufnahme und Zentrierung in einem optischen Lesegerät für Mini-CD-Format, d.h. der Positionierungsabsatz 105 (mit Durchmesser D4) entspricht dem Aufnahmekreis 105a eines Mini-CD-Laufwerkes. Der Datenträger 101 weist ein zusätzliches maschinenlesbares Funktionselement 120 auf mit Zugangsberechtigung für eine zugeordnete Funktionsstation 130. Der Funktionskarten-Formteil 103, bzw. dessen Formgebung und Kontur sowie die Anordnung des Funktionselementes 120 in der Doppelform 110 entsprechen den Randbedingungen der Funktionsstation 130 (siehe Fig. 32). Dabei ist das Funktionselement 120 außerhalb des optischen Lesebereiches 128 angeordnet, z.B. neben diesem Bereich oder auf der Rückseite eines einseitigen optischen Speicherbereichs 108. Alle Ränder 106 des optischen Speicherbereichs 102 sind vorzugsweise seitlich versiegelt. Die Dicke H des Datenträgers 101 beträgt höchstens 1,2 mm und die Karte bzw. der optische Formteil 102 weisen eine ebene Grundfläche 109 auf zwecks optimaler optischer Ablesbarkeit. Wichtig ist auch, daß der ganze Datenträger 101 inkl. Funktionselement 120 bezüglich des zentralen Innenlochs 104 ausgewuchtet ist, wiederum zwecks einwandfreier optischer Lesbarkeit und Rundlauf - vor allem bei hohen Lesegeschwindigkeiten. In diesem Beispiel wird der Positionierungsabsatz 105 gebildet durch den Rand 106 des optischen Speicher-Formteils 102 in Form von zwei Kreissektoren 116.

Die Fig. 15 und 16 zeigen einen Querschnitt längs der Linie XV - XV eines digitalen Datenträgers gemäß Fig. 14 mit zwei möglichen Ausführungsformen der einstückigen Doppelform. In Fig. 15 ist die Doppelform 110 einteilig hergestellt, d.h. die beiden Formteile 102 und 103 werden zusammen als ein Stück hergestellt. Das Beispiel von Fig. 16 zeigt demgegenüber eine Doppelform gleicher Außendimensionen, welche aus zwei separaten Formteilen 102 und 103 zu einer einstückigen Doppelform zusammengefügt ist. Dieser Aufbau der Doppelform wie auch die Integration von Funktionselementen 120, die auch aus mehreren Teilen bestehen können, wird weiter illustriert und ausgeführt zu den Fig. 23 bis 25.

Um möglichst große Speicherkapazitäten zu erreichen, kann der kreisringförmige optische Speicherbereich 108 auch über das übliche ISO-Scheckkartenformat mit einer Breite B von 54 mm hinaus vergrößert werden. Ein Beispiel dazu illustriert Fig. 19, wo der äußere Durchmesser D3 des Speicherbereichs 108 über das Normalkartenformat hinausreicht in Form von kleinen kreissektorförmigen Ausbuchtungen. Natürlich sind auch andere Formen möglich, wie etwa die eingezeichnete alternative Datenträgerkontur 101a. Je nach Anwendungszweck können Datenträger-Karten mit größerem Durchmesser D3 auch rechteckförmig ausgebildet sein mit entsprechenden Breiten B von mehr als 54 mm bis z.B. maximal 70 mm.

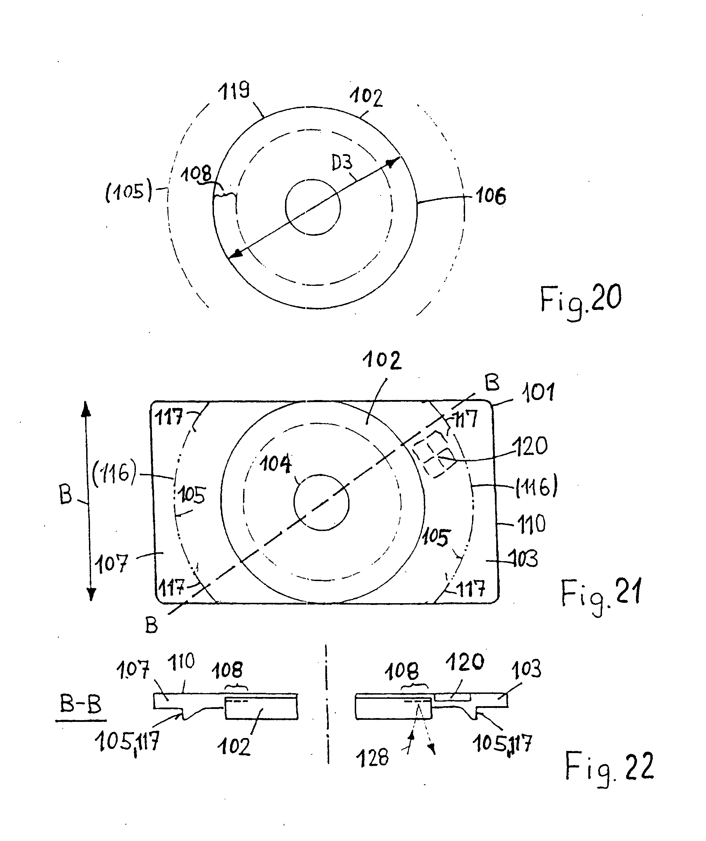

Die Fig. 20 zeigt ein weiteres Beispiel mit einem kreisförmigen (119) optischen Speicher-Formteil 102 mit einem Durchmesser D3, welcher der Kartenbreite B (Fig. 21) entspricht. Dies ergibt die kleinstmögliche Fläche des optischen Formteils 102 für den gewünschten Speicherbereich 108, was entsprechend weniger optisches Material erfordert und was auch Vorteile für die flexible Gestaltung der Außenbereiche 107 des Karten-Formteiles 103 ergeben kannentsprechend der gewünschten Anwendung.

Die Fig. 21 und 22 zeigen von unten und im Schnitt längs der Linie XXII - XXII einen Datenträger mit einem kreisförmigen optischen Formteil 102 gemäß Fig. 20 und einen Karten-Formteil 103, der den Positionierungsabsatz 105 enthält. Der Positionierungsabsatz 105 kann hier durch zwei Kreissektoren 116 analog dem Beispiel von Fig. 14 gebildet werden, wie als Alternative in Fig. 21 eingezeichnet ist. Mit diesem Beispiel kann ein Datenträger 101 realisiert werden, der einerseits einen relativ kleinen, kompakten und absolut planen mechanisch stabilen optischen Formteil 102 und andererseits einen relativ großen, dünneren und flexibleren Außenbereich 107 des Kartenfunktions-Formteiles 103 aufweist. Vorzugsweise wird hier die einstückige Doppelform aus den zwei separaten Teilen 102 und 103 gebildet, wobei natürlich für eine entsprechend andersgeartete Anwendung auch eine einteilige (127) Herstellung der Doppelform 110 dieser Art möglich ist.

Die Figuren 23 bis 25, welche im wesentlichen den Beispielen von Fig. 14, 16 und 22 entsprechen, illustrieren detaillierter den Schichtaufbau der erfindungsgemäßen Datenträger 101 bzw. der Doppelform 110. Der optische Speicher-Formteil 102 besteht im wesentlichen aus einer optischen Trägerschicht 111, einer oder mehreren Datenschichten 112 mit Reflexionsschichten 113 sowie einer Deckschicht 114 zum Schutz von Daten- und Reflexionsschichten vor Korrosion und anderen degradierenden Einflüssen. Auch alle seitlichen Ränder 106 der Informations- und Reflexionsschichten 112 und 113 sind zu diesem Zweck vorzugsweise in geeigneter Weise versiegelt (115). Ebenso an inneren Rändern, beispielsweise in Fig. 23, wo ein Funktionselement 120 in die Doppelform 110 integriert ist, besteht eine Versiegelung 115. In Fig. 24 und 25 liegt diese Versiegelung 115 an den Rändern 106 des optischen Formteils 102.

Fig. 23 zeigt eine einteilige Doppelform 110, bei welcher die Formgebung der beiden Formteile 102 und 103 als ein Teil 127 hergestellt wird, z.B. durch Pressen der Doppelform 110 in einem entsprechenden Formwerkzeug. Bei den Beispielen von Fig. 24 und 25 werden zuerst zwei separate Formteile 102 und 103 hergestellt und diese anschließend durch Zusammenfügen (Kleben oder Schweißen) in die einstökkige Doppelform 110 gebracht. Zusätzlich werden auch die Funktionselemente 120, 121, 122 in die Doppelform integriert.

Eine besonders einfache Herstellmethode liegt darin, die Funktionselemente 120 oder Teile davon bei der Herstellung einer einteiligen Doppelform 127 direkt zu integrieren, z.B. durch Einlegen in das Formwerkzeug und anschließendes Spritzen oder Pressen. Flache Funktionselemente, wie beispielsweise Kontaktelektroden 121, Magnetstreifen 125 oder Barcodes 126 können dabei auch auf der Rückseite des optischen Formteils 102, d.h. hinter der reflektierenden Schicht 113 aufgebracht werden. Dies zeigen z.B. die Fig. 18 und 25 mit einem Magnetstreifen 125 auf der Rückseite oder die Fig. 23 mit einer Kontaktelektrode 121, die ebenfalls über der Reflexionsschicht 113 und der Deckschicht 114 (und damit außerhalb des Lesebereichs 128) aufgebracht ist.

In einer alternativen Formgebung 103a in Fig. 25 kann der Funktionskarten-Formteil innerhalb des Positionierungsabsatzes 105 auch dicker ausgebildet sein als im Außenbereich 107.

Unabhängig davon, ob für eine einteilige (127) oder für eine zweiteilige Doppelform 110, haben die beiden Formteile 102 und 103 unterschiedlichen Anforderungen zu genügen: Der optische Speicher-Formteil 102 muß optisch einwandfreies Ablesen in einem entsprechenden Laufwerk ermöglichen, dazu eine mechanisch stabile, plane Grundfläche 109 aufweisen und aus geeignetem Material bestehen.
Der Funktionskarten-Formteil 103 muß entsprechend die Funktionsfähigkeit in der zugeordneten Funktionsstation 130 ermöglichen, so die Karten-Führung und -Positionierung mit passender Anordnung des Funktionselements 120 auf dem Datenträger 101, und er muß die praktische Handhabung der Karte im allgemeinen ermöglichen.

Diese unterschiedlichen Anforderungen werden durch die erfindungsgemäße Doppelform mit Positionierungsabsatz und die weiteren Merkmale von Anspruch 12 erreicht. Der äußere Bereich 107 des Funktionskarten-Teils mit reduzierter Schichtdicke HT schützt quasi den inneren, steiferen optischen Formteil 102 bzw. den optischen Speicherbereich 108, so daß dieser plan und ungestört bleibt, während äußere mechanische Beanspruchungen inklusive leichte Verbiegungen durch die erhöhte Flexibilität des dünneren Außenbereichs 107 aufgenommen werden können.

Entsprechend werden daher die Schichtdicken H, HO, HT gewählt, wobei die Gesamtdicke H maximal 1,2 mm betragen kann, d.h. höchstens entsprechend der Dicke des flachen Teils einer CD-ROM, jedoch ohne Stapelring. Oft wird jedoch eine geringere Gesamtdicke H von 0,8 bis 1,0 mm benötigt. Da der optische Speicherbereich 108 wesentlich kleiner ist als eine normale CD-ROM mit 120 mm Durchmesser, kann hier auch mit einer reduzierten Schichtdicke des optischen Speicherbereichs 102 von z.B. HO = 0,7 bis 1,0 mm dennoch eine genügende mechanische Stabilität und Planheit in diesem Bereich erreicht werden. Die totale Schichtdicke H liegt vorzugsweise in einem Bereich zwischen 0,8 und 1,1 mm. Dazu ist es erforderlich, daß der Außenbereich 107 des Funktionskarten-Formteils 103 eine reduzierte Schichtdicke HT von vorzugsweise 0,5 bis 0,7 mm aufweist und daß entsprechend die Höhe des Positionierungsabsatzes HA mindestens 0,3 mm beträgt, vorzugsweise jedoch 0,4 bis 0,5 mm.

Die totale Höhe H setzt sich zusammen aus HO + HD, d.h. mit einer allfälligen Zusatzschichtdicke HD für die Anordnung von Funktionselementen (Fig. 23) oder im Falle einer zweiteiligen Doppelschicht für eine durchgehende rückseitige Deckschicht als Zusatzschicht 114a (Fig. 24 u. 25). Anderseits beträgt die Höhe auch H = HA + HT, wobei das Verhältnis HT/H vorzugsweise zwischen 0,5 und 0,6 liegt, um die Stabilität und Planheit des optischen Speicherbereichs 108 im Vergleich zur Flexibilität des Außenbereichs 107 in ein günstiges Verhältnis zu setzen. Mit dem Positionierungsabsatz 105 wird also nicht nur die Positionierung des Datenträgers 101 in einem entsprechenden Laufwerk sichergestellt, sondern es werden auch die notwendigen mechanischen Eigenschaften der Doppelform erreicht.

Als Materialien für den optischen Speicher-Formteil eignen sich beispielsweise relativ steife Polymere wie Polycarbonat, Acrylpolymere, Polyethylentherephthalat PET oder auch Blends davon. Der separate Kartenfunktions-Formteil kann demgegenüber aus flexibleren Materialien bestehen. Im Falle von einteiligen Doppelformen aus einem einheitlichen Material wird wie schon erklärt die höhere Flexibilität des Außenbereichs 107 durch entsprechend geringere Schichtdicken HT realisiert. Diese Datenträgermaterialien können transparente oder eingefärbte Polymere enthalten und zwecks ansprechender visueller Gestaltung z.B. auch bereichsweise unterschiedlich eingefärbt und selbstverständlich auch bedruckt sein.

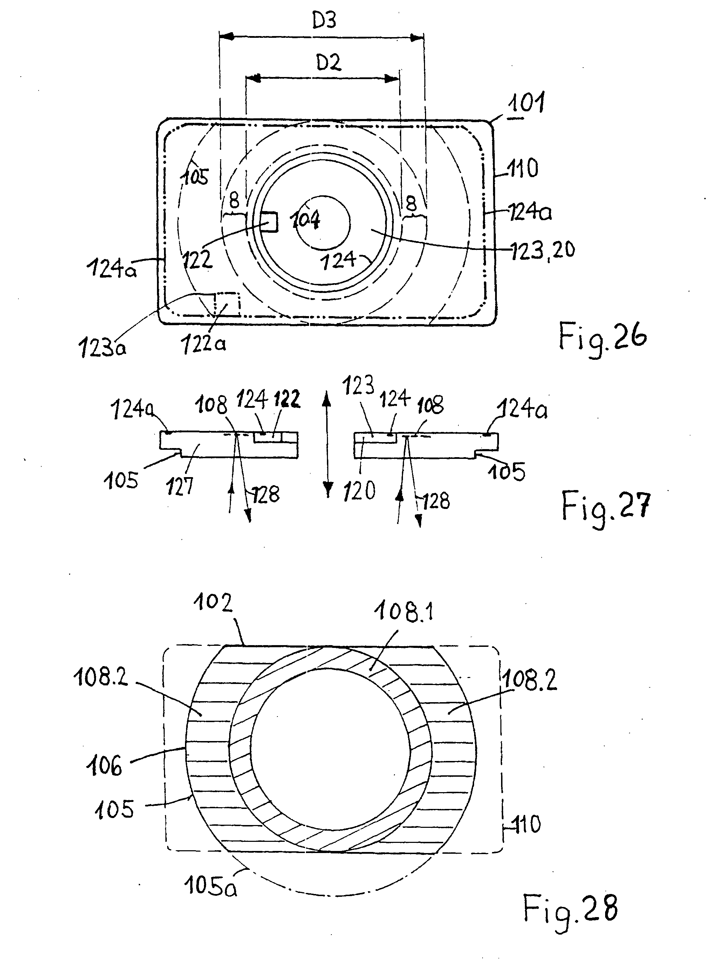

Die Fig. 26 und 27 zeigen ein Beispiel eines Datenträgers 101 mit einem Funktionselement 120, das als berührungsloses Identifikationsmedium 123 ausgebildet ist und welches aus einem Mikroprozessor-Chip 122 und einer damit verbundenen Antenne 124 besteht. Solche Identifikationsmedien an sich bekannter Art und Anwendung enthalten verschiedene Identifikations- und Sicherheitsfunktionen, mit Zulassungs- oder Zugangsberechtigungen, Identifikations- und Sicherheitscodes und auch mit Wertkartenfunktionen, die in einem Speicher des Chips 122, z.B. in Form eines EEPROMs mit 1-4 KByte Kapazität, gespeichert sind. Neu ist nun die erfindungsgemäße Kombination dieser Funktionen eines Identifikationsmediums 123 mit der um viele Größenordnungen höheren Speicherkapazität - bzw. deren Informationen - des optischen Speicherbereichs 108. Damit wird ein weites Feld ganz neuer kombinierter Anwendungen eröffnet, wie in späteren Beispielen weiter illustriert wird. In einer vorteilhaften Ausführung wird das Identifikationsmedium 123 als kreisförmige Scheibe innerhalb des optischen Bereichs 108, d.h. des Durchmessers D2, in die Doppelform integriert. Das scheibenförmige Identifikationsmedium 123 enthält dabei einen Mikroprozessor-Chip 122 und eine kreisförmige Antenne 124 zur berührungslosen Kommunikation, welche hier ungestört vom optischen Bereich 108 nach beiden Seiten, d.h. nach oben und nach unten, erfolgen kann.

Dies ist auch möglich in einer weiteren Ausführungsvariante 122a, 124a, die in Fig. 26 u. 27 alternativ dargestellt ist. Eine möglichst großflächige Antenne 124a verläuft hier dem Umfang der Karte 1 entlang, großteils außerhalb des optischen Speicherbereichs 108. Nur im Zentrum verläuft die sehr flach ausgebildete Antenne 124a durch den Rand des Bereichs 108. Dies jedoch nur auf der Rückseite der Datenträger-Karte 1, d.h. hinter der Reflexionsschicht 113 des Bereichs 108, so daß der optische Lesebereich 128 nicht beeinträchtigt wird. Auch der zugehörige Mikroprozessor-Chip 122a ist natürlich außerhalb des Bereichs 108 (bzw. des Lesebereichs 128) angeordnet. Dies ergibt eine erhöhte Kommunikationsreichweite des Identifikationsmediums 122a, 124a.

Selbstverständlich sind auch Identifikationsmedien und 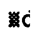 datenträger mit Kontakten 121 als Funktionselemente einsetzbar.

Zur Erhöhung der optischen Speicherkapazität des Bereichs 108 bestehen verschiedene Möglichkeiten neben der schon illustrierten Vergrößerung des Begrenzungsdurchmessers D3 nach Fig. 19. So können, wie in Fig. 28 illustriert wird, zusätzlich zum kreisringförmigen Speicherbereich oder Datenbereich 108.1 weitere Datenbereiche 108.2 vorgesehen werden, z.B. als an den Bereich 108.1 anschließende Kreissegmente oder Sektoren, welche bis zum Positionierungsabsatz 105, bzw. Aufnahmekreis 105 des Mini-CD-Formats reichen können.

Eine weitere Möglichkeit zur Erhöhung der optischen Speicherkapazität besteht darin, eine Datenkompaktierung mittels entsprechender zugeordneter Software auszuführen.

Der optisch lesbare Speicherbereich 108, bzw. das optische Speichermedium, kann im Prinzip beliebig ausgebildet sein. Je nach Anwendungszweck z.B. als einfache CD-ROM, als einmal beschreibbare CD-R oder als mehrmals beschreibbare CD-RW.

Zur wesentlichen Erhöhung der Informationskapazität kann das Medium auch als DVD-Datenträger ausgebildet sein.

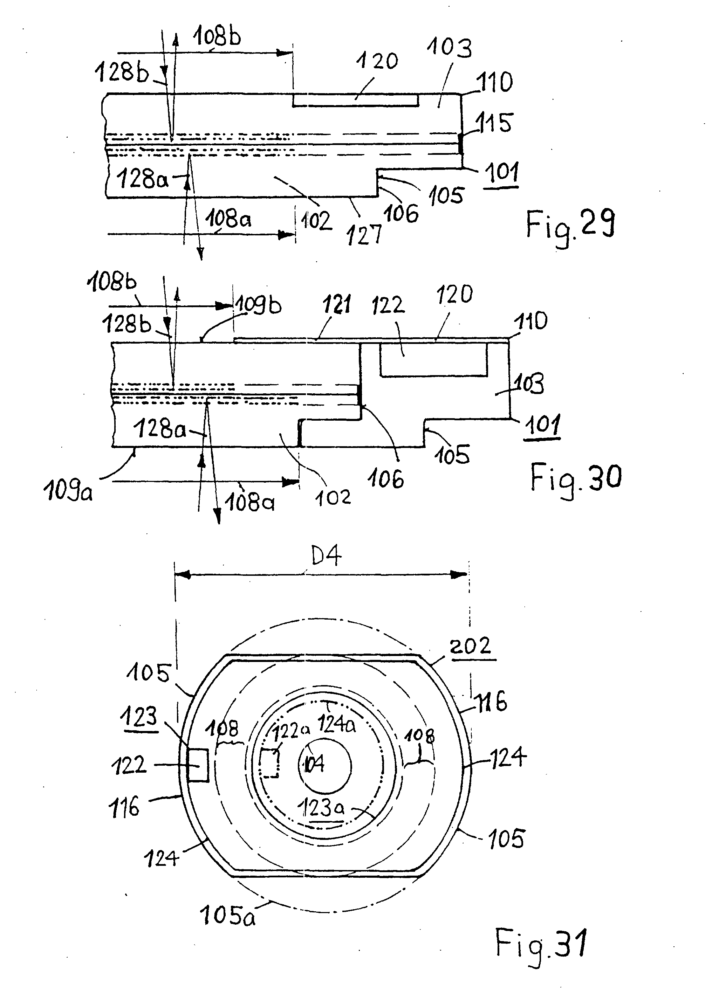

Dies illustrieren die Figuren 29 und 30, welche zweiseitig lesbare DVD-Datenträger als optischen Speicher 108 enthalten. Diese zweiseitigen DVD-Datenträger enthalten Informationsschichten, die von zwei Seiten, d.h. in den Figuren von unten (a) und von oben (b) abzulesen sind. Mit einem unteren Speicherbereich 108a, der von unten lesbar ist im Lesebereich 128a und einem oberen Speicherbereich 108b, der von oben ablesbar ist im Lesebereich 128b.

Entsprechend wird natürlich auch der Datenträger 101 mit seiner Doppelform 110 ausgebildet: Mit offenen, optische einwandfreien ebenen Grundflächen 109a und 109b des optischen Funktions-Formteils 102 und indem alle Funktionselemente 120, 121, 122 außerhalb beider Lesebereiche 128a und 128b angeordnet sind.
Wie die Beispiele zeigen, ist die einstückige Doppelform 110 auch mit DVD-Datenträgern einteilig (127) oder zweiteilig ausführbar.

Fig. 29 zeigt eine einteilige Ausführung, bei der wiederum die beiden Formteile 102 und 103 in einem Herstellvorgang zusammen erzeugt werden, und die Fig. 30 zeigt ein mögliches Beispiel einer zweiteiligen Ausführung mit einem separaten optischen Speicher--Formteil 102 und einem außenliegenden Funktionskarten-Farmteil 103, in welchen der Formteil 102 eingelegt und eingefügt ist. Der Positionierungsabsatz 105 wird hier durch den Formteil 103 gebildet, der auch ein Funktionselement 120, z.B. einen Mikroprozessor-Chip 122 enthält. Ein weiterer flacher Teil des Funktionselements, z.B. Kontaktelektroden 121, kann dabei teilweise auch über dem optischen Formteil 102 angebracht sein. Er begrenzt jedoch den optischen Speicherbereich 108b im Beispiel von Fig. 30. Auch diese DVD-Schichten weisen zwecks Verhinderung von Korrosion und degradierenden Einflüssen an allen seitlichen Rändern (106) eine Versiegelung 115 auf.

Für Anwendungen bzw. Funktionsstationen, die kein Kartenformat mit einem größten Durchmesser Dmax von mehr als 80 mm erfordern, wird eine weitere Lösung der Aufgabe vorgeschlagen: Ein optisch lesbarer Datenträger in (shaped) Mini-CD Format, in dem ein Funktionselement 120 mit Identifikationsfunktionen, d.h. ein Identifikationsdatenträger oder -medium 123, integriert ist, wobei das Funktionselement außerhalb des optischen Lesebereichs 128 angeordnet ist. Diese Datenträger benötigen keine Karten-Doppelform und deren Positionierungsabsatz 105 wird durch Teile der Außenkontur innerhalb des Mini-CD-Formats gebildet. Funktionselemente mit Identifikationsfunktionen ermöglichen höherwertige Funktionen, welche z.B. anspruchsvolle Sicherheitscodes erfordern (was z.B. für die bekannten einfachen Telefonkarten nicht erforderlich ist). Auch mit einem solchen Datenträger in Mini-CD-Format ergibt die Kombination der Identifikationsfunktionen mit der großen Speicherkapazität des optischen Speicherbereichs ein weites Feld neuer kombinierter Anwendungen wie im folgenden illustriert wird.

Fig. 31 zeigt ein Beispiel eines optisch lesbaren Datenträgers 102, dessen größter Durchmesser Dmax (von ca. 80 mm) einem Mini-CD-Laufwerk entspricht mit mindestens einem kreisringförmigen, annähernd bis zum Kartenrand reichenden optisch lesbaren Speicherbereich 108, welcher eine optische Trägerschicht 111, eine Datenschicht 112 und eine Reflexionsschicht 113 aufweist, und mit einem zentralen Innenloch 104 für den Antriebsdorn eines optischen Lesegeräts. Der Datenträger 102 weist eine Außenform mit mindestens zwei Kreissektoren 16, 17 als Ringstücke 12' zur Aufnahme und Zentrierung in einem optischen Lesegerät für Mini-CD-Format und ein Identifikationsmedium 123 als zusätzliches Funktionselement 120 für eine zugeordnete Funktionsstation 130 auf. Das Funktionselement ist außerhalb des optischen Lesebereichs 128 angeordnet und entspricht den Randbedingungen der Funktionsstation. Der Datenträger weist eine ebene Grundfläche 109 auf (kein Stapelring), und er ist als Ganzes, inklusive integriertem Funktionselement 120, bezüglich des zentralen Innenlochs 104 ausgewuchtet.

Solche Datenträger 202 mit Identifikationsmedien können sowohl in berührungsloser Form als auch mit Kontaktelektroden 121 ausgeführt sein. Besonders interessant sind natürlich berührungslose Identifikationsmedien 123, bei denen die Formgebung des Datenträgers weitgehend frei wählbar ist, bzw. sich auf die Ausgestaltung der Übertragungsantennen 124 zur berührungslosen Kommunikation mit den Funktionsstationen 130 ausrichtet. In der Fig. 31 ist ein Datenträger 202 mit berührungslosen Identifikationsmedien 123 dargestellt (ähnlich dem Beispiel von Fig. 26, jedoch in anderer Form) mit zwei Kreissektoren 116 als Außenkontur und als Positionierungsabsatz 105 für Mini-CD-Laufwerke sowie mit einer großflächigen Antenne 124 entlang der Außenkontur des Datenträgers 202 und mit einem Mikroprozessor-Chip 122 als Identifikationsdatenträger 123 außerhalb des optischen Speicherbereichs 108. Die Antenne 124 ist auf der Rückseite hinter der optischen Datenschicht und Reflexionsschicht aufgebracht und liegt damit auch ausserhalb des optischen Lesebereichs 128 (siehe Fig. 27). Als alternative Variante ist auch hier ein kreisförmiger berührungsloser Identifikationsträger 123a mit Chip 122a und Antenne 124a innerhalb des optischen Speicherbereichs 108 in der Fig. 31 dargestellt. Auch bei solchen Datenträgern 202 in Mini-CD-Format können flache Teile (wie Kontaktelektroden 121, Antenne 124, Magnetstreifen 125) von Funktionselementen 120 auf der Rückseite von einseitigen optischen Speicherbereichen angeordnet sein. Auch für die Dicke H des Datenträgers, welche vorzugsweise 0,8 bis 1,1 mm beträgt, bzw. für die Dicke der optischen Schicht HO von 0,7 bis 1,0 mm, gelten analoge Überlegungen wie bei den Datenträgerkarten 101 bzw. zu deren optischem Speicher-Formteil 102. Als optisches Speichermedium 108 sind auch hier CD-ROM-, CD-R-, CD-RW- oder DVD-Datenträger anwendbar.

Die erfindungsgemäße Datenträger-Funktionskarte 101 kann im Prinzip beliebige Kartenfunktionen und optisch lesbare Informationen kombinieren.

Die Kartenfunktionen 40 der Funktionselemente 20 ermöglichen den Bezug einer entsprechenden Leistung, beispielsweise 42 Zulassungs-, Zugangs- und Zutrittskarten,
43 Identifikations-Sicherheitskarten und Berechtigungskarten,
44 Wertkarten: Cash Cards, Telefonkarten und Parkkarten,
45 Kontokarten, Kundenkarten, Kreditkarten.

Die Darstellung der optischen Information des Speicherbereichs 108 kann direkt ablaufen oder selektiv, auswählbar, menügesteuert und interaktiv - auch in Kombination mit Kartenfunktionen - erfolgen. Auch durch einen Code der Kartenfunktion geschützte Datenteilbereiche 148 des Speicherbereichs 108 sind realisierbar, so daß z.B. persönliche Daten daraus nur mit einem Berechtigungscode auslesbar sind.

In additiven Anwendungen von Kartenfunktionen und optischen Informationen werden diese nacheinander, an verschiedenen Orten und nicht gleichzeitig ausgeübt bzw. dargestellt.

In kombinierten Anwendungen können beide an einer Station gleichzeitig und auch interaktiv ausgeübt und dargestellt werden.

Im folgenden wird an einigen Anwendungsbeispielen das große Feld völlig neuartiger Anwendungsmöglichkeiten illustriert, das mit dem erfindungsgemäßen Datenträgerkarten in Doppelform eröffnet wird:

Fig. 32 illustriert ein solches System mit Datenträgern 101 mit maschinenlesbaren Funktionselementen 120 und zugeordneten Funktionsstationen 130, an denen die Kartenfunktionen 140 ausgeübt werden können und wobei die optischen Speicherbereiche 108 der Datenträgerkarten zusätzlich auch an separaten optischen Lesestationen 135 gelesen und dargestellt werden können.

In Anwendung A werden die Datenträgerkarten 101 an optischen Lesestationen 135 mittels eines Bildschirms 136 gelesen und dargestellt. Zudem kann eine Verbindung zum Internet 150 realisiert werden. In der Anwendung B werden die Karten in einfachen Funktionsstationen 130 mit der Karte 101 Funktionen 140 ausgeübt, z.B. der Zutritt 142 zu einem bestimmten Bereich ohne Anzeige von optischer Information. In der Anwendung C der Datenträgerkarten 101 in einer kombinierten Station 130, die auch eine Lesestation 135 und einen Bildschirm 136 enthält, werden optische Informationen dargestellt und entsprechende Funktionen 142, 143, 144, 145 ausgeübt. Wie in den Beispielen noch illustriert wird, können Anwendungssysteme beliebige Kombinationen dieser drei Arten A, B, C aufweisen.

Fig. 33 illustriert als kombiniertes Anwendungsbeispiel einen Telefonkarten-Datenträger 131 mit einem Wertbereich zum Telefonieren und einem optischen Speicherbereich 108 für eine entsprechend ausgerüsteten Telefonstation 138. Diese enthält eine Funktionsstation 130 für die Funktion Telefonieren mit einem Bildschirm zur Anzeige und Suche von Telefonnummern aus einer Datei. Zusätzlich ist ein optisches Laufwerk und Lesegerät 135 in die Funktionsstation 130 integriert mit einem internen Speicher 134 (z.B. in Form von RAM-Chips oder einer Hard-Disk) zur Aufnahme der Information aus dem optischen Speicherbereich 108 der Telefonkarte 131. Beim Einschieben der Karte 131 in die Station 130 wird zuerst die Zugangsberechtigung gelesen (d.h. geprüft, ob ein Wertbetrag zum Telefonieren vorhanden ist), anschließend wird die Karte im optischen Laufwerk 135 gelesen und deren Information in den internen Speicher 134 geladen. Darauf kann während dem Telefonieren unter Abbuchung des Wertbereichs der Karte gleichzeitig auch die gespeicherte optische Information aus dem Speicher 134 am Bildschirm 136 abgespielt werden (z.B. eine Firmeninformation oder PR-Darstellungen des Herausgebers der Telefonkarte).

Eine abgewandelte weitere Anwendung für Mobiltelefone mit hochauflösendem Bildschirm kann ein Telefonkarten-Datenträger 131 darstellen, auf dem z.B. Personendaten mit Foto und Telefonnummern von Mitgliedern einer Firma oder eines Vereins optisch gespeichert sind. Damit kann der Karteninhaber die optische Information der Karte z.B. mittels eines PC auslesen, in einen internen Speicher des Mobiltelefons einlesen und damit dann diese Information zum Telefonieren auf dem Display des Mobiltelefons anzeigen und nutzen (z.B. Telefonnummer und Foto des gewünschten Gesprächspartners anzeigen).

Ein weiteres Beispiel bildet ein Ferienkarten-Datenträger mit Kartenfunktionen zum Bezug von Leistungen verschiedenster Art in einer Ferienregion und mit Informationen zu dieser Ferienregion und ihrem Leistungsangebot im optischen Speicherbereich 108 der Karte. Damit können z.B. schon vor der Reise in das Feriengebiet zu Hause das Angebot (Hotels, Bahnen, Sport- und Freizeitangebote etc.) in einem PC (mit oder ohne Internet-Link) angeschaut, ausgewählt und sogar allfällige Reservationen vorgenommen werden. Im Feriengebiet können abwechselnd Leistungen bezogen werden wie Skifahren, Schwimmen, Kino, Restaurant, Veranstaltungen und Cash-Card-Bezüge etc. und Informationen darüber sowie Auswahl und Buchung einzelner Leistungen vorgenommen werden.

In einer ähnlichen Art können als weiteres Beispiel Clubkarten-Datenträger z.B. als Jahreskarte für Mitglieder eines Freizeitclubs einerseits das Leistungsangebot des Clubs zeigen und anderseits den Bezug der verschiedenen Leistungen durch die Karte mit den integrierten Funktionen ermöglichen.

Als weiteres Anwendungsbeispiel können die erfindungsgemäßen Datenträger-Funktionskarten beispielsweise an großen Veranstaltungen wie Messen oder Ausstellungen für verschiedene Berechtigungs-, Zugangs- und Bezugsfunktionen eingesetzt werden, und der optische Speicherbereich 108 kann die persönlichen Daten mit Fotografie des ganzen Veranstaltungspersonals enthalten. Damit kann ein Mitglied des Personals an einer Funktionsstation z.B. einen codegeschützten Zugang erhalten und zusätzlich noch mit den persönlichen Daten inklusive Bild der Person aus dem optischen Speicher überprüft werden. Dies bildet eine zusätzliche Sicherheitsfunktion.

In gleicher Weise können natürlich auch die persönlichen Daten mit Foto des Personals einer weltweit tätigen Firma in den optischen Speicherbereich 108 der Datenträgerkarte aufgenommen werden und somit eine Person bei Ausübung von Kartenfunktionen für die Firma an verschiedenen Orten auf der Welt zusätzlich noch durch ihre persönlichen Daten mit Bild identifiziert werden. Dadurch kann auch ein nicht berechtigter Benutzer einer solchen (z.B. gestohlenen) Datenträgerkarte anhand dieser persönlichen Daten und Foto überprüft und als nicht berechtigt festgestellt werden.

## Patentansprüche

1. Digitaler Datenträger mit einem von einem Standardaußendurchmesser abweichenden Umriß eines Trägerkörpers zur Abspielung in einem Standard-CD-Laufwerk, das eine ausfahrbare Schublade mit einer ersten Aufnahme für Datenträger größeren Standarddurchmessers und einer zweiten Aufnahme für Datenträger kleineren Standarddurchmessers aufweist, der an einer der Schublade zugewandten Unterseite des Trägerkörpers eine Zentrierhilfe zur Zentrierung in der zweiten Aufnahme aufweist, **dadurch gekennzeichnet**, **daß** die Zentrierhilfe (11) aus zwei einander gegenüberliegenden, auf die zweite Aufnahme (13) abgestimmten, Ringstücken (12,12') ausgebildet ist.

2. Digitaler Datenträger nach Anspruch 1, **dadurch gekennzeichnet, daß** die Ringstücke (12) einen wulstförmigen Querschnitt (17) aufweisen.

3. Digitaler Datenträger nach Anspruch 1 oder 2, **dadurch gekennzeichnet, daß** die Ringstücke (12) eine Breite (18) zwischen 0,3 bis 1,0 mm aufweisen.

4. Digitaler Datenträger nach Anspruch 3, **dadurch gekennzeichnet, daß** die Ringstücke (12) eine Breite (18) von etwa 0,5 mm aufweisen.

5. Digitaler Datenträger nach Anspruch 1, **dadurch gekennzeichnet, daß** die Ringstücke (12') einen Positionierungsabsatz (105) bilden und eine Breite (18') aufweisen, die nach außen von einem dem kleineren Standarddurchmesser entsprechenden Außendurchmesser (14) und nach innen von dem Innendurchmesser der Zentrierbohrung (4, 104) begrenzt wird.

6. Digitaler Datenträger nach einem der Ansprüche 1 bis 5, **dadurch gekennzeichnet**, **daß** die Ringstücke (12) eine Höhe (19) zwischen 0,3 bis 1 mm aufweisen.

7. Digitaler Datenträger nach Anspruch 6, **dadurch gekennzeichnet, daß** die Ringstücke (12) eine Höhe (19) von etwa 0,8 mm aufweisen.

8. Digitaler Datenträger nach einem der Ansprüche 1 bis 7, **dadurch gekennzeichnet**, **daß** die Ringstücke (12, 12') einen Außendurchmesser (14) von 80 mm entsprechend einer Mini-CD aufweisen.

9. Digitaler Datenträger nach einem der Ansprüche 1 bis 8, **dadurch gekennzeichnet**, **daß** die Unterseite (7) Informationen in digitalisierter Form aufweist, die von dem Standard-CD-Laufwerk (6) lesbar sind, und daß eine der Unterseite (7) abgewandte Oberseite (9) Informationen (10) in aufgedruckter Form zur visuellen Betrachtung aufweist.

10. Digitaler Datenträger nach einem der Ansprüche 1 bis 9, **dadurch gekennzeichnet**, **daß** der Trägerkörper (2, 101) mindestens einen kreisringförmigen, annähernd bis zum Kartenrand reichenden optisch lesbaren Speicherbereich (108) mit einer optischen Trägerschicht (111), einer Datenschicht (112) und mit einer Reflexionsschicht (113) aufweist.

11. Digitaler Datenträger nach einem der Ansprüche 1 bis 10, **dadurch gekennzeichnet**, **daß** der Trägerkörper (2, 101) einen optischen Speicher-Formteil (102) und ein Funktionskarten-Formteil (103) aufweist, welche in eine einstückige Doppelform (110) integriert sind.

12. Digitaler Datenträger nach einem der Ansprüche 1 bis 11, **dadurch gekennzeichnet**, **daß** der Trägerkörper (2, 101) mindestens ein zusätzliches Funktionselement (120) für eine zugeordnete Funktionsstation (130) aufweist, wobei der Funktionskarten-Formteil (103) und die Anordnung des Funktionselementes (120) den geometrischen Randbedingungen der Funktionsstation (130) entsprechen.

13. Digitaler Datenträger nach Anspruch 12, **dadurch gekennzeichnet, daß** das Funktionselement (120) außerhalb des optischen Lesebereichs (128) angeordnet ist.

14. Digitaler Datenträger nach einem der Ansprüche 5 bis 13, **dadurch gekennzeichnet**, **daß** der Trägerkörper (2, 101) eine Dicke (H) aufweist, die höchstens 1,2 mm beträgt und eine ebene Grundfläche (109) aufweist.

15. Digitaler Datenträger nach einem der Ansprüche 12 bis 14, **dadurch gekennzeichnet**, **daß** der Trägerkörper (2, 101) mit dem Funktionselement (120) bezüglich der Zentrierbohrung (104) ausgewuchtet ist.

16. Digitaler Datenträger nach einem der Ansprüche 1 bis 15, **dadurch gekennzeichnet**, **daß** das Kartenformat dem ISO-Scheckkartenformat von 54 x 86 mm entspricht und alle Ränder des optischen Speicherbereichs seitlich versiegelt sind (115).

17. Digitaler Datenträger nach einem der Ansprüche 1 bis 16, **dadurch gekennzeichnet**, **daß** der optische Speicherbereich (108) einen Durchmesser (D3) zwischen 54 mm und 70 mm aufweist.

18. Digitaler Datenträger nach einem der Ansprüche 11 bis 17, **dadurch gekennzeichnet**, **daß** außerhalb des kreisringförmigen Speicherbereichs (108.1) zusätzliche Datenbereiche (108.2) im optischen Speicher-Formteil (102) vorgesehen sind.

19. Digitaler Datenträger nach einem der Ansprüche 11 bis 18, **dadurch gekennzeichnet**, **daß** der optische Speicher-Formteil (102) durch zwei Kreissektoren (116) mit 80 mm Durchmesser begrenzt wird.

20. Digitaler Datenträger nach einem der Ansprüche 11 bis 18, **dadurch gekennzeichnet**, **daß** der optische Speicher-Formteil (102) kreisförmig (119) ausgebildet ist mit einem Durchmesser (D3), welcher der Kartenbreite (B) entspricht und wobei der Positionierungsabsatz (105) durch den Karten-Formteil (103) gebildet wird.

21. Digitaler Datenträger nach einem der Ansprüche 11 bis 20, **dadurch gekennzeichnet**, **daß** der Positionierungsabsatz (105) durch den Karten-Formteil (103) gebildet wird.

22. Digitaler Datenträger nach einem der Ansprüche 11 bis 21, **dadurch gekennzeichnet**, **daß** die Doppelform (110) einteilig (127) hergestellt ist.

23. Digitaler Datenträger nach einem der Ansprüche 11 bis 22, **dadurch gekennzeichnet**, **daß** der Trägerkörper (101) aus mindestens zwei separaten Teilen (102, 103) zur Doppelform (110) zusammengefügt ist.

24. Digitaler Datenträger nach einem der Ansprüche 11 bis 23, **dadurch gekennzeichnet**, **daß** die Höhe (HA) des Positionierungsabsatzes (105) 0,3 mm bis 0,5 mm beträgt.

25. Digitaler Datenträger nach einem der Ansprüche 11 bis 24, **dadurch gekennzeichnet**, **daß** die Dicke (H) des Trägerkörpers (101) 0,8 mm bis 1,1 mm, die Dicke (HO) des optischen Formteiles (102) 0,7 bis 1,0 mm und die Dicke (HT) des Außenbereich (107) des Karten-Formteils (103) 0,5 bis 0,7 mm beträgt.

26. Digitaler Datenträger nach einem der Ansprüche 1 bis 25, **dadurch gekennzeichnet**, **daß** der optische Speicherbereich (108) bzw. der Trägerkörper (101) als CD-ROM-, CD-R-, CD-RW- oder DVD-Datenträger ausgebildet.

27. Digitaler Datenträger nach einem der Ansprüche 1 bis 26, **dadurch gekennzeichnet**, **daß** der Trägerkörper (2, 101) bzw. der optische Speicherbereich (108) eine Datenkompaktierung mittels zugeordneter Software aufweist.

28. Digitaler Datenträger nach einem der Ansprüche 12 bis 27, **dadurch gekennzeichnet**, **daß** mindestens Teile des Funktionselementes (120) in eine einteiligen Doppelform (127) integriert sind.

29. Digitaler Datenträger nach einem der Ansprüche 12 bis 28, **dadurch gekennzeichnet**, **daß** das Funktionselement (120) als Magnetstreifen oder Barcode ausgebildet ist.

30. Digitaler Datenträger nach einem der Ansprüche 12 bis 29, **dadurch gekennzeichnet**, **daß** das Funktionselement (120) einen Mikrochip (122) aufweist.

31. Digitaler Datenträger nach Anspruch 30, **dadurch gekennzeichnet, daß** das Funktionselement (120) einen Kontakt-Chip als Mikrochip (122) und Kontaktelektroden (121) aufweist.

32. Digitaler Datenträger nach Anspruch 30, **dadurch gekennzeichnet, daß** der Mikrochip (122) als berührungsloser Chip ausgebildet ist.

33. Digitaler Datenträger nach Anspruch 30, **dadurch gekennzeichnet, daß** der Mikrochip (122) als biochemischer Chip ausgebildet ist.

34. Digitaler Datenträger nach Anspruch 30, **dadurch gekennzeichnet, daß** der Mikrochip (122) als Kugel-Chip ausgebildet ist.

35. Digitaler Datenträger nach Anspruch 30, **dadurch gekennzeichnet, daß** der Mikrochip (122) als elektronischer Chip ausgebildet ist.

36. Digitaler Datenträger nach einem der Ansprüche 29 bis 35, **dadurch gekennzeichnet, daß** der Mikrochip (122) als Speicherchip ausgebildet ist.

37. Digitaler Datenträger nach einem der Ansprüche 29 bis 36, **dadurch gekennzeichnet**, **daß** das Funktionselement (20) als berührungsloses Identifikationsmedium (23) mit einer Antenne (24) und mit Identifikationsfunktionen ausgebildet ist.

38. Digitaler Datenträger nach einem der Ansprüche 10 bis 37, **dadurch gekennzeichnet**, **daß** die Reflexionsschicht als Antenne ausgebildet ist.

39. Digitaler Datenträger nach Anspruch 38, **dadurch gekennzeichnet, daß** die Reflexionsschicht mit einer zusätzlichen Metallschicht verstärkt ist.

40. Digitaler Datenträger nach einem der Ansprüche 1 bis 39, **dadurch gekennzeichnet**, **daß** der Trägerkörper (2, 101) verschiedene zusätzliche Schichten mit zusätzlichen Funktionen aufweist.

41. Digitaler Datenträger nach Anspruch 40, **dadurch gekennzeichnet, daß** die zusätzlichen Schichten eine Batterie bilden, die zwischen benachbarten Schichten unterschiedlicher Metallegierungen eine Isolationsschicht aufweist.

42. Digitaler Datenträger nach Anspruch 40 oder 41, **dadurch gekennzeichnet**, **daß** Teilbereiche des Trägerkörpers (2, 101) zusätzliche Schichten unterschiedlicher Legierungen nebeneinander aufweisen.

43. Digitaler Datenträger nach einem der Ansprüche 1 bis 42, **dadurch gekennzeichnet**, **daß** der Trägerkörper (2, 101)eine abrubbelbare Beschichtung aufweist.

44. Digitaler Datenträger nach einem der Ansprüche 1 bis 43, **dadurch gekennzeichnet**, **daß** ein kreisförmiger berührungsloser Identifikationsdatenträger innerhalb des optischen Speicherbereichs (108) angeordnet ist.

45. Digitaler Datenträger nach einem der Ansprüche 12 bis 44, **dadurch gekennzeichnet**, **daß** insbesondere auf der Rückseite von einseitigen optischen Speicherbereichen (108) flache Teile (121, 124, 125) von Funktionselementen (120) angeordnet sind.

46. Digitaler Datenträger nach einem der Ansprüche 12 bis 45, **dadurch gekennzeichnet**, **daß** die Funktionselemente (120) Identifikationsmedien mit Zulassungs- und Zugangsfunktionen (142), Identifikations- (143), Konto- und Kreditkartenfunktionen (145) und/oder Wertkartenfunktionen (144) aufweisen.

47. Digitaler Datenträger nach einem der Ansprüche 12 bis 46, **dadurch gekennzeichnet**, **daß** der optische Speicherbereich (108) Datenteilbereiche (148) enthält, welche nur mittels einer vorzugsweise codierten Zulassungsfunktion des Funktionselements (120) lesbar sind.

48. Digitaler Datenträger nach einem der Ansprüche 12 bis 47, **dadurch gekennzeichnet**, **daß** das Funktionselement (120) eine Telefonkarte oder eine Wertkarte (144) definiert.

49. Digitaler Datenträger nach einem der Ansprüche 12 bis 48, **dadurch gekennzeichnet**, **daß** der optische Formteil (102) Polycarbonat, Acrylpolymere oder PET aufweist.

50. Digitaler Datenträger nach einem der Ansprüche 1 bis 49, **dadurch gekennzeichnet**, **daß** der Trägerkörper (2, 101) elektronische Bausteine aufweist, die von einer Batterie gespeist werden.

51. Digitaler Datenträger nach einem der Ansprüche 1 bis 50, **dadurch gekennzeichnet**, **daß** der Trägerkörper (2, 101) elektronische Schaltungen aufweist.

52. Digitaler Datenträger nach einem der Ansprüche 1 bis 51, **dadurch gekennzeichnet**, **daß** der Trägerkörper (2, 101) elektronische Bausteine aufweist, die von einer Batterie gespeist werden.

53. Digitaler Datenträger nach einem der Ansprüche 1 bis 52, **dadurch gekennzeichnet**, **daß** der Trägerkörper (2, 101) mindestens einen Solarbaustein aufweist.

54. Digitaler Datenträger nach einem der Ansprüche 1 bis 53, **dadurch gekennzeichnet**, **daß** der Trägerkörper (2, 101) eine Flüssigkristallanzeige aufweist.

55. Digitaler Datenträger nach einem der Ansprüche 1 bis 54, **dadurch gekennzeichnet**, **daß** der Trägerkörper (2, 101) ein Mikroobjektiv aufweist.

56. Digitaler Datenträger nach einem der Ansprüche 1 bis 55, **dadurch gekennzeichnet**, **daß** der Trägerkörper (2, 101) einen Infrarotsender aufweist.

57. Digitaler Datenträger nach einem der Ansprüche 1 bis 56, **dadurch gekennzeichnet**, **daß** der Trägerkörper (2, 101) einen Infrarotempfänger aufweist.

58. Digitaler Datenträger nach einem der Ansprüche 1 bis 57, **dadurch gekennzeichnet**, **daß** der Trägerkörper (2, 101) aufgebrachte Sicherheitsmerkmale aufweist.

59. Digitaler Datenträger nach einem der Ansprüche 1 bis 58, **dadurch gekennzeichnet**, **daß** der Trägerkörper (2) als Shaped-CD (20) mit einem freien Umriß (21) ausgebildet ist.

60. Digitaler Datenträger nach einem der Ansprüche 1 bis 58, **dadurch gekennzeichnet**, **daß** der Trägerkörper (2) als Visitenkarte (22) ausgebildet ist.

61. Digitaler Datenträger nach Anspruch 60, **dadurch gekennzeichnet, daß** die Visitenkarte (22) einen im wesentlichen rechteckigen Umriß (23) aufweist.

62. Digitaler Datenträger nach einem der Ansprüche 1 bis 58, **dadurch gekennzeichnet**, **daß** der Trägerkörper (2) als Eintrittskarte (24) ausgebildet ist.

63. Digitaler Datenträger nach Anspruch 62, **dadurch gekennzeichnet, daß** der Trägerkörper (2) an seinem Umfang (25) mindestens einen abtrennbaren Entwertungsabschnitt (26, 26', 26'') aufweist.

64. Digitaler Datenträger nach Anspruch 63, **dadurch gekennzeichnet, daß** der Entwertungsabschnitt (26, 26') zum Trägerkörper (2) hin eine vorgeformte Bruchrille (27) aufweist.

65. Digitaler Datenträger nach Anspruch 63 oder 64, **dadurch gekennzeichnet**, **daß** der Entwertungsabschnitt (26, 26') über mindestens einen Steg (28, 29) mit dem Trägerkörper verbunden ist.

66. Digitaler Datenträger nach Anspruch 65, **dadurch gekennzeichnet, daß** der Entwertungsabschnitt (26') über zwei an seinen äußeren Enden (30) angeordneten Stegen (29) mit dem Trägerkörper (2) verbunden ist.

67. Digitaler Datenträger nach einem der Ansprüche 63 bis 66, **dadurch gekennzeichnet**, **daß** der Trägerkörper (2) einen im wesentlichen rechteckigen Umriß (25) aufweist, an dessen Seiten die Entwertungsabschnitte (26, 26') angeordnet sind.

68. Digitaler Datenträger nach einem der Ansprüche 5 bis 67, **dadurch gekennzeichnet**, **daß** der Positionierungsabsatz (105) den Trägerkörper (202) bildet und ein Funktionselement (120) mit Identifikationsfunktion (123) aufweist.

69. System mit einem Datenträger (101) nach einem der Ansprüche 1 bis 68 und mit zugeordneten Funktionsstationen (130), **dadurch gekennzeichnet**, **daß** die Karten-Funktionen (140) an den Funktionsstationen (130') ausgeübt werden können und daß die optischen Speicherbereiche (108) zusätzlich auch von optischen Lesestationen (135) gelesen werden können.

70. System nach Anspruch 69, **dadurch gekennzeichnet daß** an den Funktionsstationen (130) sowohl Karten-Funktionen (140) ausgeübt als auch mittels optischen Laufwerken und Lesestationen (135) optische Informationen aus dem Speicherbereich (108) ausgelesen und dargestellt werden können.

71. System nach Ansprach 70, **dadurch gekennzeichnet**, **daß** die Funktionsstationen zusätzlich einen internen Speicher (134) aufweisen in dem optische Informationen aus dem Speicherbereich (108) einlesbar sind.

## Claims

1. Digital data carrier with a carrier body having an outline which deviates from the standard outer diameter, for playing in a standard CD-drive having an ejectable tray which has a first receiving section for data carriers with a larger standard diameter and a second receiving section for data carriers with a smaller standard diameter, said digital data carrier having a centering aid on the lower side of the carrier body facing towards the tray for centering in the second receiving section, **characterized in that** the centering aid (11) consists of two ring pieces (12,12') which are located opposite each other and which are matched to the second receiving section (13).

2. Digital data carrier in accordance with claim 1, **characterized in that** the ring pieces (12) have a bead-like cross-section (17).

3. Digital data carrier in accordance with claim 1 or claim 2, **characterized in that** the ring pieces (12) have a width (18) between 0.3 to 1.0 mm.

4. Digital data carrier in accordance with claim 3, **characterized in that** the ring pieces (12) have a width (18) of approximately 0.5 mm.

5. Digital data carrier in accordance with claim 1, **characterized in that** the ring pieces (12') form a positioning shoulder (105) and have a width (18') which. is bounded outwardly by an outer diameter (14) corresponding to a smaller standard diameter and inwardly by the inner diameter of the centering bore (4, 104).

6. Digital data carrier in accordance with any one of the claims 1 to 5, **characterized in that** the ring pieces (12) have a height (19) between 0.3 to 1 mm.

7. Digital data carrier in accordance with claim 6, **characterized in that** the ring pieces (12) have a height (19) of approximately 0.8 mm.

8. Digital data carrier in accordance with any one of the claims 1 to 7, **characterized in that** the ring pieces (12, 12') have an outer diameter (14) of 80 mm corresponding to a mini-CD.

9. Digital data carrier in accordance with any one of the claims 1 to 8, **characterized in that** the lower side (7) has information in digitized form which can be read by the standard CD drive (6); and in that an upper side (9) which faces away from the lower side (7) contains information (10) in printed form for visual inspection.

10. Digital data carrier in accordance with any one of the claims 1 to 9, **characterized in that** the carrier body (2, 101) has at least one circular optically readable memory area (108) which reaches approximately up to the edge of the card and has an optical carrier layer (111), a data layer (112) and a reflection layer (113).

11. Digital data carrier in accordance with any one of the claims 1 to 10, **characterized in that** the carrier body (2, 101) has at least one optical memory molding (102) and a functional card molding (103) which are integrated into a single-piece dual molding (110).

12. Digital data carrier in accordance with any one of the claims 1 to 11, **characterized in that** the carrier body (2, 101) has at least one additional functional element (120) for an associated functional station (130), with the functional card molding (103) and the arrangement of the functional element (120) corresponding to the geometrical boundary conditions of the functional station (130).

13. Digital data carrier in accordance with claim 12, **characterized in that** the functional element (120) is arranged outside the optical reading area (128).

14. Digital data carrier in accordance with any one of the claims 5 to 13, **characterized in that** the carrier body (2, 101) has a thickness (H) which amounts at most to 1.2 mm and a planar base surface (109).

15. Digital data carrier in accordance with any one of the claims 12 to 14, **characterized in that** the carrier body (2, 101) with the functional element (120) is balanced with respect to the centering bore (104).

16. Digital data carrier in accordance with any one of the claims 1 to 15, **characterized in that** the card format corresponds to the ISO check card format of 54 x 86 mm and all edges of the optical memory region are sealed off (115).

17. Digital data carrier in accordance with any one of the claims 1 to 16, **characterized in that** the optical memory region (108) has a diameter (D3) between 54 mm and 70 mm.

18. Digital data carrier in accordance with any one of the claims 11 to 17, **characterized in that** additional data regions (108.2) are provided in the optical memory molding (102) outside the circular memory region (108.1).

19. Digital data carrier in accordance with any one of the claims 11 to 18, **characterized in that** the optical memory molding (102) is bounded by two circular sectors (116) with 80 mm diameter.

20. Digital data carrier in accordance with any one of the claims 11 to 18, **characterized in that** the optical memory molding (102) is made circular (119) with a diameter (D3) which corresponds to the card width (B) and with the positioning shoulder (105) being formed by the card molding (103).

21. Digital data carrier in accordance with any one of the claims 11 to 20, **characterized in that** the positioning shoulder (105) is formed by the card molding (103).

22. Digital data carrier in accordance with any one of the claims 11 to 21, **characterized in that** the dual molding (110) is manufactured in a single piece (127).

23. Digital data carrier in accordance with any one of the claims 11 to 22, **characterized in that** the data carrier (101) is assembled from at least two separate parts (102, 103) to make the dual molding (110).

24. Digital data carrier in accordance with any one of the claims 11 to 23, **characterized in that** the height (HA) of the positioning shoulder (105) amounts to 0.3 mm to 0.5 mm.

25. Digital data carrier in accordance with any one of the claims 11 to 24, **characterized in that** the thickness (H) of the carrier body (101) amounts to 0.8 mm, to 1.1 mm, the thickness (HO) of the optical molding (102) amounts to 0.7 to 1.0 mm and the thickness (HT) of the outer region (107) of the card molding (103) amounts to 0.5 to 0.7 mm.

26. Digital data carrier in accordance with any one of the claims 1 to 25, **characterized in that** the optical memory region (108) or the carrier body (101) respectively is formed as a CD-ROM, CD-R, CD-RW or DVD data carrier.

27. Digital data carrier in accordance with any one of the claims 1 to 26, **characterized in that** the carrier body (2, 101) or the optical memory region (108) respectively has a data compressing by means of associated software.

28. Digital data carrier in accordance with any one of the claims 12 to 27, **characterized in that** at least parts of the functional element (120) are integrated into a single-piece dual molding (127).

29. Digital data carrier in accordance with any one of the claims 12 to 28, **characterized in that** the functional element (120) is formed as a magnetic strip or bar code.

30. Digital data carrier in accordance with any one of the claims 12 to 29, **characterized in that** the functional element (120) has a microchip (122).

31. Digital data carrier in accordance with claim 30, **characterized in that** the functional element (120) has a contact chip as a microchip (122) and contact electrodes (121).

32. Digital data carrier in accordance with claim 30, **characterized in that** the microchip (122) is formed as a contact-free chip.

33. Digital data carrier in accordance with claim 30, **characterized in that** the microchip (122) is formed as a biochemical chip.

34. Digital data carrier in accordance with claim 30, **characterized in that** the microchip (122) is formed as a ball chip.

35. Digital data carrier in accordance with claim 30, **characterized in that** the microchip (122) is formed as an electronic chip.

36. Digital data carrier in accordance with any one of the claims 29 to 35, **characterized in that** the microchip (122) is formed as a memory chip.

37. Digital data carrier in accordance with any one of the claims 29 to 36, **characterized in that** the functional element (20) is formed as a contact-free identification medium (23) with an antenna (24) and with identification functions.

38. Digital data carrier in accordance with any one of the claims 10 to 37, **characterized in that** the reflection layer is formed as an antenna.

39. Digital data carrier in accordance with claim 38, **characterized in that** the reflection layer is reinforced with an additional metallic layer.

40. Digital data carrier in accordance with any one of the claims 1 to 39, **characterized in that** the carrier body (2, 101) has additional layers with additional functions.

41. Digital data carrier in accordance with claim 40, **characterized in that** the additional layers form a battery which has an insulation layer between adjacent layers of different metallic alloys.

42. Digital data carrier in accordance with claim 40 or claim 41, **characterized in that** regions of the carrier body (2, 101) have additional layers of different alloys adjacently to one another.

43. Digital data carrier in accordance with any one of the claims 1 to 42, **characterized in that** the carrier body (2, 101) has a coating which can be rubbed off.

44. Digital data carrier in accordance with any one of the claims 1 to 43, **characterized in that** a circular contact-free identification data carrier is arranged within the optical memory region (108).

45. Digital data carrier in accordance with any one of the claims 12 to 44, **characterized in that** flat parts (121, 124, 125) of functional elements (120) are arranged in particular on the reverse side of single-sided optical memory regions (108).

46. Digital data carrier in accordance with any one of the claims 12 to 45, **characterized in that** the functional elements (120) have identification media with authorization and access functions (142), identification (143), account and credit card functions (145) and/or value card functions (144).

47. Digital data carrier in accordance with any one of the claims 12 to 46, **characterized in that** the optical memory region (108) contains data regions (148) which are legible only by means of a preferably coded authorization function of the functional element (120).

48. Digital data carrier in accordance with any one of the claims 12 to 47, **characterized in that** the functional element (120) defines a telephone card or a value card (144).

49. Digital data carrier in accordance with any one of the claims 12 to 48, **characterized in that** the optical molding (102) contains polycarbonate, acryl polymers or PET.

50. Digital data carrier in accordance with any one of the claims 1 to 49, **characterized in that** the carrier body (2, 101) contains electronic components which are fed by a battery.

51. Digital data carrier in accordance with any one of the claims 1 to 50, **characterized in that** the carrier body (2, 101) contains electronic circuits.

52. Digital data carrier in accordance with any one of the claims 1 to 51, **characterized in that** the carrier body (2, 101) contains electronic components which are fed by a battery.

53. Digital data carrier in accordance with any one of the claims 1 to 52, **characterized in that** the carrier body (2, 101) contains at least one solar component.

54. Digital data carrier in accordance with any one of the claims 1 to 53, **characterized in that** the carrier body (2, 101) contains a liquid crystal display.

55. Digital data carrier in accordance with any one of the claims 1 to 54, **characterized in that** the carrier body (2, 101) contains a micro-objective.

56. Digital data carrier in accordance with any one of the claims 1 to 55, **characterized in that** the carrier body (2, 101) contains an infrared transmitter.

57. Digital data carrier in accordance with any one of the claims 1 to 56, **characterized in that** the carrier body (2, 101) contains an infrared receiver.

58. Digital data carrier in accordance with any one of the claims 1 to 57, **characterized in that** the carrier body (2, 101) contains applied security features.

59. Digital data carrier in accordance with any one of the claims 1 to 58, **characterized in that** the carrier body (2) is formed as a shaped CD (20) with a free outline (21).

60. Digital data carrier in accordance with any one of the claims 1 to 58, **characterized in that** the carrier body (2) is formed as a business card (22).

61. Digital data carrier in accordance with claim 60, **characterized in that** the business card (22) has a substantially rectangular outline (23).

62. Digital data carrier in accordance with any one of the claims 1 to 58, **characterized in that** the carrier body (2) is formed as an admission ticket (24).

63. Digital data carrier in accordance with claim 62, **characterized in that** the carrier body (2) has at its periphery (25) at least one separable cancellation section (26, 26', 26").

64. Digital data carrier in accordance with claim 63, **characterized in that** the cancellation section (26, 26') has a preformed fracture groove (27) in the direction towards the carrier body (2).

65. Digital data carrier in accordance with claim 63 or claim 64, **characterized in that** the cancellation section (26, 26') is connected to the carrier body via at least one web (28, 29).

66. Digital data carrier in accordance with claim 65, **characterized in that** the cancellation section (26') is connected to the carrier body (2) via two webs (29) which are arranged at its outer ends (30).

67. Digital data carrier in accordance with any one of the claims 63 to 66, **characterized in that** the carrier body (2) has a substantially rectangular outline (25), at the sides of which the cancellation sections (26, 26') are arranged.

68. Digital data carrier in accordance with any one of the claims 5 to 67, **characterized in that** the positioning shoulder (105) forms the carrier body (202) and has a functional element (120) with identification function (123).

69. System comprising a data carrier (101) in accordance with any one of the claims 1 to 68 and comprising associated functional stations (130), **characterized in that** the card functions (140) can be exercised at the functional stations (130); and in that the optical memory regions (108) can also be read by optical reading stations (135).

70. System in accordance with claim 69, **characterized in that** card functions (140) can be exercised at the functional stations (130) and optical information can also be read out of the memory region (108) and displayed by means of optical drives and reading stations (135).

71. System in accordance with claim 70, **characterized in that** the functional stations also have an internal memory (134) in which optical information can be read out of the memory region (108).

## Revendications

1. Support de données numériques dont le corps de support présente un contour qui diffère d'un diamètre extérieur standard et destiné à être lu dans un lecteur de disques numériques standards, celui-ci comportant un tiroir avec un premier moyen de réception pour des supports de données présentant un grand diamètre standard et un deuxième moyen de réception pour des supports de données présentant un petit diamètre standard, et qui comporte sur la face inférieure du corps de support tourné vers le tiroir un aide de centrage en vue du centrage dans le deuxième moyen de réception, **caractérisé en ce que** l'aide de centrage (11) est réalisé en deux morceaux annulaires (12, 12') mutuellement opposés et ajustés vis-à-vis du deuxième moyen de réception (13).

2. Support de données numériques selon la revendication 1, **caractérisé en ce que** les morceaux annulaires (12) présentent une section transversale (17) en forme de bourrelet.

3. Support de données numériques selon l'une ou l'autre des revendications 1 et 2, **caractérisé en ce que** les morceaux annulaires (12) ont une largeur (18) entre 0,3 et 1,0 mm.

4. Support de données numériques selon la revendication 3, **caractérisé en ce que** les morceaux annulaires (12) ont une largeur (18) d'environ 0,5 mm.

5. Support de données numériques selon la revendication 1, **caractérisé en ce que** les morceaux annulaires (12) forment un talon de positionnement (105) et ont une largeur (18') qui est limitée vers l'extérieur par un diamètre extérieur (14) qui correspond au petit diamètre standard, et vers l'intérieur par le diamètre intérieur du perçage de centrage (4, 104).

6. Support de données numériques selon l'une des revendications 1 à 5, **caractérisé en ce que** les morceaux annulaires (12) ont une hauteur (19) entre 0,3 et 1 mm.

7. Support de données numériques selon la revendication 6, **caractérisé en ce que** les morceaux annulaires (12) ont une hauteur (19) d'environ 0,8mm.

8. Support de données numériques selon l'une des revendications 1 à 7, **caractérisé en ce que** les morceaux annulaires (12, 12') ont un diamètre extérieur (14) de 80 mm en correspondance d'un "mini-CD".

9. Support de données numériques selon l'une des revendications 1 à 8, **caractérisé en ce que** la face inférieure (7) porte des informations sous forme numérisée, susceptibles d'être lues par un lecteur (6) de disques numériques standards, et en ce qu'une face supérieure (9) opposée à la face inférieure (7) comporte des informations (10) sous forme imprimée pour leur observation visuelle.

10. Support de données numériques selon l'une des revendications 1 à 9, **caractérisé en ce que** le corps de support (2, 101) comporte au moins une zone de stockage (108) de forme circulaire et s'étendant jusqu'au bord de la carte, susceptible d'être lue par voie optique, avec une couche de support optique (111), une couche de données (112) et une couche de réflexion (113).

11. Support de données numériques selon l'une des revendications 1 à 10, **caractérisé en ce que** le corps de support (2, 101) comporte une partie conformée (102) destinée au stockage optique, et une partie conformée (103) destinée à constituer une carte fonctionnelle, lesdites parties étant intégrées en une partie conformée double (110) d'une seule pièce.

12. Support de données numériques selon l'une des revendications 1 à 11, **caractérisé en ce que** le corps de support (2, 101) comprend au moins un élément fonctionnel additionnel (120) pour une station fonctionnelle associée (130), ladite partie conformée (103) destinée à constituer une carte fonctionnelle et l'agencement de l'élément fonctionnel (120) correspondant aux conditions aux limites géométriques de la station fonctionnelle (130).

13. Support de données numériques selon la revendication 12, **caractérisé en ce que** l'élément fonctionnel (120) est agencé à l'extérieur de la zone de lecture optique (128).

14. Support de données numériques selon l'une des revendications 5 à 13, **caractérisé en ce que** le corps de support (2, 101) a une épaisseur (H) qui s'élève au maximum à 1,2 mm et présente une surface de base plane (109).

15. Support de données numériques selon l'une des revendications 12 à 14, **caractérisé en ce que** le corps de support (2, 101) est équilibré par rapport au perçage de centrage (104) au moyen de l'élément fonctionnel (120).

16. Support de données numériques selon l'une des revendications 1 à 15, **caractérisé en ce que** le format de la carte correspond au format de carte de crédit ISO de 54 x 86 mm, et en ce que toutes les bordures de la zone de stockage optique sont scellées latéralement (115).

17. Support de données numériques selon l'une des revendications 1 à 16, **caractérisé en ce que** la zone de stockage optique (108) a un diamètre (D3) entre 54 et 70 mm.

18. Support de données numériques selon l'une des revendications 11 à 17, **caractérisé en ce que**, à l'extérieur de la zone de stockage de forme circulaire (108.1) sont prévues des zones de données additionnelles (108.2) dans la partie conformée (102) destinée au stockage optique.

19. Support de données numériques selon l'une des revendications 11 à 18, **caractérisé en ce que** la partie conformée (102) destinée au stockage optique est limitée par deux secteurs circulaires (116) de 80 mm de diamètre.

20. Support de données numériques selon l'une des revendications 11 à 18, **caractérisé en ce que** la partie conformée (102) destinée au stockage optique est réalisée sous forme circulaire (119) avec un diamètre (D3) qui correspond à la largeur (B) de la carte, et dans laquelle le talon de positionnement (105) est formé par la partie conformée (103) destinée à former une carte.

21. Support de données numériques selon l'une des revendications 11 à 20, **caractérisé en ce que** le talon de positionnement (105) est formé par la partie conformée (103) destinée à former une carte.

22. Support de données numériques selon l'une des revendications 11 à 21, **caractérisé en ce que** la forme double (110) est réalisée en un seul tenant (127).

23. Support de données numériques selon l'une des revendications 11 à 22, **caractérisé en ce que** le corps de support (101) est constitué d'au moins deux parties séparées (102, 103) regroupées pour donner ladite forme double (110).

24. Support de données numériques selon l'une des revendications 11 à 23, **caractérisé en ce que** la hauteur (HA) du talon de positionnement (105) est de 0,3 à 0,5 mm.

25. Support de données numériques selon l'une des revendications 11 à 24, **caractérisé en ce que** l'épaisseur (H) du corps de support (101) est de 0,8 à 1,1 mm, l'épaisseur (HO) de la partie conformée (102) destinée au stockage optique est de 0,7 à 1,0 mm, et l'épaisseur (HT) de la zone extérieure (107) de la partie conformée (103) destinée à former une carte est de 0,5 à 0,7 mm.

26. Support de données numériques selon l'une des revendications 1 à 25, **caractérisé en ce que** la zone de stockage optique (108), ou respectivement le corps de support (101), est réalisée sous forme de support de données du type CD-ROM, CD-R, CD-RW, ou DVD.

27. Support de données numériques selon l'une des revendications 1 à 26, **caractérisé en ce que** le corps de support (2, 101), ou respectivement la zone de stockage optique (108), présente une compression de données au moyen d'un logiciel associé.

28. Support de données numériques selon l'une des revendications 12 à 27, **caractérisé en ce que** des parties au moins de l'élément fonctionnel (120) sont intégrées dans une forme double d'un seul tenant (127).

29. Support de données numériques selon l'une des revendications 12 à 28, **caractérisé en ce que** l'élément fonctionnel (120) est réalisé sous forme de ruban magnétique, ou de code à barres.

30. Support de données numériques selon l'une des revendications 12 à 29, **caractérisé en ce que** l'élément fonctionnel (120) comprend une micropuce (122).

31. Support de données numériques selon la revendication 30, **caractérisé en ce que** l'élément fonctionnel (120) comprend une puce à contacts à titre dé micropuce (122) et des électrodes de contact (121).

32. Support de données numériques selon la revendication 30, **caractérisé en ce que** la micropuce (122) est réalisée sous la forme de puce sans contact.

33. Support de données numériques selon la revendication 30, **caractérisé en ce que** la micropuce (122) est réalisée sous forme de puce biochimique.

34. Support de données numériques selon la revendication 30, **caractérisé en ce que** la micropuce (122) est réalisée sous forme de puce sphérique.

35. Support de données numériques selon la revendication 30, **caractérisé en ce que** la micropuce (122) est réalisée sous forme de puce électronique.

36. Support de données numériques selon l'une des revendications 29 à 35, **caractérisé en ce que** la micropuce (122) est réalisée sous la forme de puce à mémoire.

37. Support de données numériques selon l'une des revendications 29 à 36, **caractérisé en ce que** l'élément fonctionnel (20) est réalisé sous forme d'un moyen d'identification sans contact (23) comportant une antenne (24) et des fonctions d'identification.

38. Support de données numériques selon l'une des revendications 10 à 37, **caractérisé en ce que** la couche de réflexion est réalisée à titre d'antenne.

39. Support de données numériques selon la revendication 38, **caractérisé en ce que** la couche de réflexion est renforcée par une couche métallique additionnelle.

40. Support de données numériques selon l'une des revendications 1 à 39, **caractérisé en ce que** le corps de support (2, 101) présente diverses couches additionnelles avec des fonctions additionnelles.

41. Support de données numériques selon la revendication 40, **caractérisé en ce que** les couches additionnelles forment une batterie, laquelle comporte une couche d'isolation entre des couches voisines formées d'alliages métalliques différents.

42. Support de données numériques selon l'une ou l'autre des revendications 40 et 41, **caractérisé en ce que** des zones partielles du corps de support (2, 101) comportent des couches additionnelles de différents alliages les unes à côté des autres.

43. Support de données numériques selon l'une des revendications 1 à 42, **caractérisé en ce que** le corps de support (2, 101) comporte un revêtement à gratter.

44. Support de données numériques selon l'une des revendications 1 à 43, **caractérisé en ce qu**'un support d'informations d'identification sans contact et de forme circulaire est agencé à l'intérieur de la zone de stockage optique (108).

45. Support de données numériques selon l'une des revendications 12 à 44, **caractérisé en ce que**, en particulier sur la face postérieure de zones de stockage optique unilatérales (108), sont agencées des parties planes (121, 124, 125) d'éléments fonctionnels (120).

46. Support de données numériques selon l'une des revendications 12 à 45, **caractérisé en ce que** les éléments fonctionnels (120) comportent des moyens d'identification avec des fonctions d'autorisation et d'accès (142), des fonctions d'identification (143), des fonctions de compte et de carte de crédit (145) et/ou des fonctions de carte de valeur (144).

47. Support de données numériques selon l'une des revendications 12 à 46, **caractérisé en ce que** la zone de stockage optique (108) contient des zones partielles de données (148) qui ne sont lisibles qu'au moyen d'une fonction d'autorisation, de préférence codée, de l'élément fonctionnel (120).

48. Support de données numériques selon l'une des revendications 12 à 47, **caractérisé en ce que** l'élément fonctionnel (120) définit une carte téléphonique, ou une carte de valeur (144).

49. Support de données numériques selon l'une des revendications 12 à 48, **caractérisé en ce que** la partie conformée optique (102) comprend du polycarbonate, de l'acrylpolymère, ou du PET.

50. Support de données numériques selon l'une des revendications 1 à 49, **caractérisé en ce que** le corps de support (2, 101) comporte des composants électroniques qui sont alimentés depuis une batterie.

51. Support de données numériques selon l'une des revendications 1 à 50, **caractérisé en ce que** le corps de support (2, 101) comporte des circuits électroniques.

52. Support de données numériques selon l'une des revendications 1 à 51, **caractérisé en ce que** le corps de support (2, 101) comporte des composants électroniques qui sont alimentés depuis une batterie.

53. Support de données numériques selon l'une des revendications 1 à 52, **caractérisé en ce que** le corps de support (2, 101) comporte au moins un composant solaire.

54. Support de données numériques selon l'une des revendications 1 à 53, **caractérisé en ce que** le corps de support (2, 101) comporte un affichage à cristaux liquides.

55. Support de données numériques selon l'une des revendications 1 à 54, **caractérisé en ce que** le corps de support (2, 101) comporte un microobjectif.

56. Support de données numériques selon l'une des revendications 1 à 55, **caractérisé en ce que** le corps de support (2, 101) comporte un émetteur à infrarouges.

57. Support de données numériques selon l'une des revendications 1 à 56, **caractérisé en ce que** le corps de support (2, 101) comporte un récepteur à infrarouges.

58. Support de données numériques selon l'une des revendications 1 à 57, **caractérisé en ce que** le corps de support (2,101) comporte des éléments de sécurité appliqués.

59. Support de données numériques selon l'une des revendications 1 à 58, **caractérisé en ce que** le corps de support (2) est réalisé sous la forme d'un disque compact en forme (20) avec contour libre (21).

60. Support de données numériques selon l'une des revendications 1 à 58, **caractérisé en ce que** le corps de support (2) est réalisé sous forme de carte de visite (22).

61. Support de données numériques selon la revendication 60, **caractérisé en ce que** la carte de visite (22) présente un contour sensiblement rectangulaire (23).

62. Support de données numériques selon l'une des revendications 1 à 58, **caractérisé en ce que** le corps de support (2) est réalisé sous forme de carte d'entrée (24).

63. Support de données numériques selon la revendication 62, **caractérisé en ce que** le corps de support (2) comporte à sa périphérie (25) au moins un tronçon d'annulation séparable (26, 26', 26").

64. Support de données numériques selon la revendication 63, **caractérisé en ce que** le tronçon d'annulation (26, 26') comporte une rainure de rupture (27) préformée vers le corps de support (2).

65. Support de données numériques selon l'une ou l'autre des revendications 63 et 64, **caractérisé en ce que** le tronçon d'annulation (26, 26') est relié au corps de support par l'intermédiaire d'au moins une barrette (28, 29).

66. Support de données numériques selon la revendication 65, **caractérisé en ce que** le tronçon d'annulation (26') est relié au corps de support (2) par l'intermédiaire de deux barrettes (29) agencées à ses extrémités extérieures (30).

67. Support de données numériques selon l'une des revendications 63 à 66, **caractérisé en ce que** le corps de support (2) présente un contour sensiblement rectangulaire (25), et en ce que les tronçons d'annulation (26, 26') sont agencés sur les côtés de celui-ci.

68. Support de données numériques selon l'une des revendications 5 à 67, **caractérisé en ce que** le talon de positionnement (105) forme le corps de support (202) et comporte un élément fonctionnel (120) avec fonction d'identification (123).

69. Système comprenant un support de données (101) selon l'une des revendications 1 à 68, et comprenant des stations fonctionnelles associées (130), **caractérisé en ce que** les fonctions de carte (140) peuvent être mises en oeuvre au niveau des stations fonctionnelles (130), et en ce que les zones de stockage optique (108) peuvent être additionnellement lues également par des stations de lecture optique (135).

70. Système selon la revendication 69, **caractérisé en ce qu**'au niveau des stations fonctionnelles (130) il est possible de mettre en oeuvre les fonctions de carte (140) et simultanément également lire des informations optiques à partir de la zone de stockage (108) au moyen de lecteurs optiques et de stations de lecture (135), et les afficher.

71. Système selon la revendication 70, **caractérisé en ce que** les stations fonctionnelles comprennent additionnellement une mémoire interne (134) dans laquelle peuvent être lues des informations optiques provenant de la zone de stockage (108).
